# EUROPEAN PATENT APPLICATION

(11) **EP 4 665 013 A1**
(43) Date of publication of application: **17.12.2025**
(21) Application number: 24752775.7
(22) Date of filing: 01.02.2024
(51) Int. Cl.: H04W 52/36

(54) **POWER HEADROOM REPORTING METHOD, COMMUNICATION APPARATUS, TERMINAL AND NETWORK DEVICE**

(30) Priority: 06.02.2023 CN 202310118984
(71) Applicant: Beijing Unisoc Communications Technology Co., Ltd., Beijing 100083 (CN)
(72) Inventor: MA, Dawei, Beijing 100083 (CN)
(74) Representative: Vossius & Partner Patentanwälte Rechtsanwälte mbB
(86) International application number: PCT/CN2024/075185
(87) International publication number: WO 2024/164919

(57) **Abstract**

The present application provides a power headroom reporting method, a communication apparatus, a terminal and a network device. The method includes: transmitting a power headroom (PH) value of an uplink transmission corresponding to target configuration information. The target configuration information is configuration information, among multiple pieces of configuration information corresponding to uplink transmission(s), for which a power headroom report (PHR) is triggered. The solution provided by the present application enables power headroom reporting in a multi-panel transmission scenario.

## Description

The present application claims priority to Chinese patent application No. 202310118984.2, filed to China National Intellectual Property Administration on February 6, 2023 and entitled **"POWER HEADROOM REPORTING METHOD, COMMUNICATION APPARATUS, TERMINAL AND NETWORK DEVICE",** which is hereby incorporated by reference in its entirety.

### TECHNICAL FIELD

The present application relates to the field of communication technologies, and in particular, to a power headroom reporting method, a communication apparatus, a terminal, and a network device.

### BACKGROUND

In the standardization of the third generation partnership project (Third Generation Partnership Project, abbreviated as 3GPP), simultaneous transmission from multiple panels (Simultaneous Transmission from Multiple Panels, or Simultaneous multi-panel UL transmission, abbreviated as STxMP) is currently under discussion. A single antenna panel may not provide good coverage in all directions, and a signal transmitted by the single antenna panel may be blocked by a device itself or the surrounding environment (e.g., human body). If a terminal device has multiple antenna panels, it is expected to achieve better gain and performance. Furthermore, if the terminal device is configured to use STxMP technology for uplink transmission, there is no relevant solutions or discussions at present on how the terminal device reports power headroom.

### SUMMARY

The present application provides a power headroom reporting method, a communication apparatus, a terminal, and a network device, enabling power headroom reporting in a multi-panel transmission scenario.

In a first aspect, an embodiment of the present application provides a power headroom reporting method, including: transmitting a power headroom (PH) value of an uplink transmission corresponding to target configuration information; where the target configuration information is configuration information, among multiple pieces of configuration information corresponding to uplink transmission(s), for which a power headroom report (PHR) is triggered.

Optionally, a transmission scheme of the uplink transmission is a first transmission scheme or a second transmission scheme; where the first transmission scheme is any one of the following: space division multiplexing (SDM), single frequency network (SFN), frequency division multiplexing (FDM), code division multiplexing (CDM); in the second transmission scheme, uplink transmissions corresponding to the multiple pieces of configuration information are identical or different, and the uplink transmission corresponding to the configuration information is any one of the following: a physical uplink shared channel (PUSCH), a physical uplink control channel (PUCCH), a sounding reference signal (SRS).

Optionally, if the transmission scheme is the second transmission scheme, the uplink transmissions corresponding to the multiple pieces of configuration information overlap or do not overlap in a time domain.

Optionally, the configuration information is at least one of the following: a control resource set, a control resource set pool, a control resource set group, a terminal capability set, terminal capability, a transmission configuration indicator (TCI) state, a TCI state pool, a terminal capability value, a terminal capability value set, a reference signal resource, a reference signal resource set, a reference signal resource group, a number of reference signal ports, an antenna panel, an antenna array, an antenna sub-array, an antenna group, an antenna sub-group, an antenna set, an antenna subset, a serving cell, a physical cell.

Optionally, before the transmitting the PH value of the uplink transmission corresponding to the target configuration information, the method further includes: receiving information for configuring a trigger parameter, where the trigger parameter includes a common trigger parameter and/or an independent trigger parameter corresponding to each configuration information.

Optionally, if the trigger parameter includes the common trigger parameter, and only a trigger condition corresponding to the common trigger parameter is satisfied, a PHR is triggered for each configuration information.

Optionally, if a transmission scheme of the uplink transmission is a first transmission scheme, the trigger parameter includes only the common trigger parameter; where the first transmission scheme is any one of the following: space division multiplexing (SDM), single frequency network (SFN), frequency division multiplexing (FDM), code division multiplexing (CDM).

Optionally, for each configuration information, if an uplink transmission corresponding to the configuration information is an actual uplink transmission, a PH value corresponding to the configuration information is an actual PH value calculated based on the actual uplink transmission; if the configuration information has no corresponding actual uplink transmission, the PH value corresponding to the configuration information is a virtual PH value calculated based on a reference uplink transmission.

Optionally, the independent trigger parameter includes any one or more of the following: a PHR periodic timer, a PHR prohibit timer, a PHR transmit power change factor, a type 2 PHR report for other cells, other cell group mode, multi-PHR, an FR2 band maximum permissible exposure (MPE) report, an MPE prohibit timer, an MPE threshold, a number N of reported power management maximum power reduction (P-MPR) values, an MPE resource pool.

Optionally, the trigger parameter further includes a mode indication parameter, and the mode indication parameter is used to indicate whether to report multiple PH values by a terminal device.

Optionally, first configuration information is triggered for PHR in any one of the following situations, the first configuration information being any one of the multiple pieces of configuration information: a PHR prohibit timer corresponding to the first configuration information expires or has expired, and a path loss change corresponding to the first configuration information exceeds a PHR transmit power change factor corresponding to the first configuration information; a PHR periodic timer corresponding to the first configuration information expires; a PHR function corresponding to the first configuration information is configured or reconfigured by a higher layer, and the configuration or reconfiguration is not used to disable the PHR function; any secondary cell (SCell) of a MAC entity configured with an uplink (UL) is activated, or any SCell of a MAC entity configured with a UL corresponding to the first configuration information is activated, and a first activated downlink bandwidth part (BWP) identifier of the SCell is not set to a dormant BWP; any secondary cell group (SCG) is activated; addition or update of a primary secondary cell (PSCell); a PHR prohibit timer corresponding to the first configuration information expires or has expired, and for any activated serving cell of any MAC entity configured with an uplink and having a UL resource for new transmission, or for any activated serving cell of any MAC entity configured with an uplink, having a UL resource for new transmission and corresponding to the first configuration information, the following situations are true: the cell is allocated with a UL resource for transmission or a physical uplink control channel (PUCCH) transmission, and a change of power reduction corresponding to the first configuration information required by power management of the cell has exceeded a PHR transmit power change factor corresponding to the first configuration information; an activated BWP of any SCell of a MAC entity configured with a UL is switched from a dormant BWP to a non-dormant downlink BWP, or an activated BWP of any SCell of a MAC entity configured with a UL corresponding to the first configuration information is switched from a dormant BWP to a non-dormant downlink BWP; if an FR2 MPE report is configured, an MPE prohibit timer corresponding to the first configuration information is not running, and a measured P-MPR corresponding to the first configuration information for meeting an FR2 MPE requirement is greater than or equal to an MPE threshold corresponding to the first configuration information; if an FR2 MPE report is configured, and an MPE prohibit timer corresponding to the first configuration information is not running, and for at least one activated FR2 serving cell, a change of a P-MPR corresponding to the first configuration information for meeting an FR2 MPE requirement exceeds a PHR transmit power change factor corresponding to the first configuration information.

Optionally, PH values corresponding to N pieces of configuration information are carried in a single medium access control-control element (MAC CE), N being a positive integer; where the N pieces of configuration information are all target configuration information, or the N pieces of configuration information are N1 pieces of target configuration information and (N-N1) pieces of configuration information for which PHR is not triggered, and N1 is a positive integer less than N.

Optionally, sorting or positions of the PH values of the N pieces of configuration information in the MAC CE is determined based on identifier values of the N pieces of configuration information.

Optionally, the MAC CE further includes first indication information, the first indication information being used to indicate configuration information corresponding to a respective PH value in the MAC CE.

Optionally, a UL resource corresponding to one of the N pieces of configuration information is used to carry the MAC CE, or a UL resource corresponding to each of the N pieces of configuration information is used to carry the MAC CE, or a UL resource corresponding to one of the N1 pieces of target configuration information is used to carry the MAC CE, or a UL resource corresponding to each target configuration information among the N pieces of configuration information is used to carry the MAC CE.

Optionally, the MAC CE further includes at least one of the following: a maximum transmit power corresponding to each PH value carried; a maximum transmit power of a terminal device; maximum transmit powers corresponding to the N pieces of configuration information.

Optionally, PH values corresponding to N pieces of configuration information are carried in N MAC CEs respectively, N being a positive integer; where the N pieces of configuration information are all target configuration information, or the N pieces of configuration information are N1 pieces of target configuration information and (N-N1) pieces of configuration information for which PHR is not triggered, and N1 is a positive integer less than N.

Optionally, each MAC CE further includes second indication information, the second indication information being used to indicate configuration information corresponding to a PH value carried by the MAC CE.

Optionally, a carrying order or a transmission order of the N MAC CEs in an uplink resource is determined based on identifier values of the N pieces of configuration information.

Optionally, each MAC CE further includes at least one of the following: a maximum transmit power corresponding to a PH value carried by the MAC CE; a maximum transmit power of a terminal device.

Optionally, a UL resource corresponding to one of the N pieces of configuration information is used to carry the N MAC CEs, or a UL resource corresponding to one of the N1 pieces of target configuration information is used to carry the N MAC CEs, or a UL resource corresponding to each configuration information among the N pieces of configuration information is used only to carry a MAC CE corresponding to that configuration information, or UL resources corresponding to the N1 pieces of target configuration information are each used to carry the N MAC CEs, or a UL resource corresponding to each configuration information among the N pieces of configuration information is used to carry MAC CEs corresponding to the N pieces of configuration information.

Optionally, the target configuration information at least includes second configuration information and third configuration information, a MAC CE containing a PH value corresponding to the second configuration information is carried on a second UL resource, and a MAC CE containing a PH value corresponding to the third configuration information is carried on a third UL resource; or, a MAC CE containing a PH value corresponding to the second configuration information and a MAC CE containing a PH value corresponding to the third configuration information are both carried on the second UL resource, and/or a MAC CE containing a PH value of the second configuration information and a MAC CE containing a PH value of the third configuration information are both carried on the third UL resource; where the second UL resource is a UL resource corresponding to the second configuration information, and the third UL resource is a UL resource corresponding to the third configuration information.

Optionally, if the second UL resource and the third UL resource do not overlap or partially overlap in a time domain, the MAC CE containing the PH value of the second configuration information and the MAC CE containing the PH value of the third configuration information are both carried only on whichever of the second UL resource and the third UL resource becomes available earlier.

Optionally, the PH value corresponding to the second configuration information is an actual PH value calculated based on an actual uplink transmission corresponding to the second configuration information, and the PH value corresponding to the third configuration information is an actual PH value calculated based on an actual uplink transmission corresponding to the third configuration information; or, if the second UL resource and the third UL resource do not overlap or partially overlap in a time domain, for configuration information corresponding to an earlier-available resource between the second UL resource and the third UL resource, a PH value corresponding to the configuration information is an actual PH value calculated based on an actual uplink transmission corresponding to the configuration information; for configuration information corresponding to a later-available resource between the second UL resource and the third UL resource, a PH value corresponding to the configuration information is a virtual PH value calculated based on a reference uplink transmission corresponding to the configuration information.

Optionally, the target configuration information only includes second configuration information, configuration information for which PHR is not triggered at least includes fourth configuration information, the transmitting the PH value of the uplink transmission corresponding to the target configuration information includes: transmitting a PH value corresponding to the second configuration information, where a MAC CE containing the PH value corresponding to the second configuration information is carried only on a second UL resource, or is carried on an earlier-available UL resource between the second UL resource and a fourth UL resource, or is carried on both the second UL resource and a fourth UL resource; where the second UL resource is a UL resource corresponding to the second configuration information, and the fourth UL resource is a UL resource corresponding to the fourth configuration information.

Optionally, the PH value corresponding to the second configuration information is an actual PH value calculated based on an actual uplink transmission corresponding to the second configuration information; or, if the second UL resource and the fourth UL resource do not overlap or partially overlap in a time domain, the PH value corresponding to the second configuration information is a virtual PH value calculated based on a reference uplink transmission corresponding to the second configuration information, or the PH value corresponding to the second configuration information is an actual PH value calculated based on an actual uplink transmission corresponding to the second configuration information.

Optionally, the method further includes: transmitting a PH value corresponding to the fourth configuration information, where a MAC CE containing the PH value corresponding to the fourth configuration information is carried only on the second UL resource or the fourth UL resource, or is carried on an earlier-available UL resource between the second UL resource and the fourth UL resource, or is carried on both the second UL resource and the fourth UL resource.

Optionally, if the second UL resource and the fourth UL resource completely overlap or partially overlap in a time domain, the PH value corresponding to the fourth configuration information is calculated based on an actual uplink transmission corresponding to the fourth configuration information.

Optionally, if the second UL resource and the fourth UL resource do not overlap or partially overlap in a time domain, the PH value corresponding to the fourth configuration information is calculated based on an actual uplink transmission or a reference uplink transmission corresponding to the fourth configuration information.

Optionally, if there are multiple pieces of target configuration information, and a terminal device does not support calculation or reporting of multiple PH values, a MAC CE containing a PH value corresponding to each target configuration information is carried only on a UL resource corresponding to the target configuration information.

Optionally, if there is one piece of target configuration information, and a terminal device does not support calculation or reporting of multiple PH values, a MAC CE containing the PH value corresponding to the target configuration information is carried only on a UL resource corresponding to the target configuration information, or is carried on an earliest-available resource among UL resources corresponding to the multiple pieces of configuration information, or is carried simultaneously on a UL resource corresponding to each configuration information; where the PH value corresponding to the target configuration information is calculated based on an actual uplink transmission or a reference uplink transmission corresponding to the target configuration information.

Optionally, the transmitting the PH value of the uplink transmission corresponding to the target configuration information includes: if there are multiple pieces of target configuration information, and a terminal device does not support calculation or reporting of multiple PH values, transmitting a MAC CE containing a PH value corresponding to default configuration information.

Optionally, the PH value corresponding to the default configuration information is calculated based on an actual uplink transmission corresponding to the default configuration information.

Optionally, the default configuration information is configuration information with a smallest identifier value, and/or the default configuration information is configuration information in a slot where a UL resource for transmitting the PH value is located.

Optionally, the MAC CE containing the PH value corresponding to the default configuration information is carried on a UL resource corresponding to the default configuration information, or is carried on an earliest-available resource among UL resources corresponding to respective target configuration information, or is carried on a UL resource corresponding to each target configuration information; or, if UL resources corresponding to the multiple pieces of target configuration information completely overlap or partially overlap, the MAC CE containing the PH value corresponding to the default configuration information is carried on each overlapping UL resource.

In a second aspect, embodiments of the present application provide another power headroom reporting method, including: receiving a power headroom (PH) value of an uplink transmission corresponding to target configuration information; where the target configuration information is configuration information, among multiple pieces of configuration information corresponding to uplink transmission(s), for which a power headroom report (PHR) is triggered.

Optionally, a transmission scheme of the uplink transmission is a first transmission scheme or a second transmission scheme; where the first transmission scheme is any one of the following: space division multiplexing (SDM), single frequency network (SFN), frequency division multiplexing (FDM), code division multiplexing (CDM); in the second transmission scheme, uplink transmissions corresponding to the multiple pieces of configuration information are identical or different, and the uplink transmission corresponding to the configuration information is any one of the following: a physical uplink shared channel (PUSCH), a physical uplink control channel (PUCCH), and a sounding reference signal (SRS).

Optionally, if the transmission scheme is the second transmission scheme, the uplink transmissions corresponding to the multiple pieces of configuration information overlap or do not overlap in a time domain.

Optionally, the configuration information is at least one of the following: a control resource set, a control resource set pool, a control resource set group, a terminal capability set, terminal capability, a transmission configuration indicator (TCI) state, a TCI state pool, a terminal capability value, a terminal capability value set, a reference signal resource, a reference signal resource set, a reference signal resource group, a number of reference signal ports, an antenna panel, an antenna array, an antenna sub-array, an antenna group, an antenna sub-group, an antenna set, an antenna subset, a serving cell, a physical cell.

Optionally, before the receiving the PH value of the uplink transmission corresponding to the target configuration information, the method further includes: configuring a trigger parameter, where the trigger parameter includes a common trigger parameter and/or an independent trigger parameter corresponding to each configuration information.

Optionally, if the trigger parameter includes the common trigger parameter, and only a trigger condition corresponding to the common trigger parameter is satisfied, a PHR is triggered for each configuration information.

Optionally, if a transmission scheme of the uplink transmission is a first transmission scheme, the trigger parameter includes only the common trigger parameter; where the first transmission scheme is any one of the following: space division multiplexing (SDM), single frequency network (SFN), frequency division multiplexing (FDM), code division multiplexing (CDM).

Optionally, for each configuration information, if an uplink transmission corresponding to the configuration information is an actual transmission, a PH value corresponding to the configuration information is an actual PH value calculated based on the actual uplink transmission; if the configuration information has no corresponding actual uplink transmission, the PH value corresponding to the configuration information is a virtual PH value calculated based on a reference uplink transmission.

Optionally, the independent trigger parameter includes any one or more of the following: a PHR periodic timer, a PHR prohibit timer, a PHR transmit power change factor, a type 2 PHR report for other cells, other cell group mode, multi-PHR, an FR2 band maximum permissible exposure (MPE) report, an MPE prohibit timer, an MPE threshold, a number N of reported power management maximum power reduction (P-MPR) values, an MPE resource pool.

Optionally, the trigger parameter further includes a mode indication parameter, and the mode indication parameter is used to indicate whether to report multiple PH values by a terminal device.

Optionally, first configuration information is triggered for PHR in any one of the following situations, the first configuration information being any one of the multiple pieces of configuration information: a PHR prohibit timer corresponding to the first configuration information expires or has expired, and a path loss change corresponding to the first configuration information exceeds a PHR transmit power change factor corresponding to the first configuration information; a PHR periodic timer corresponding to the first configuration information expires; a PHR function corresponding to the first configuration information is configured or reconfigured by a higher layer, and the configuration or reconfiguration is not used to disable the PHR function; any secondary cell (SCell) of a MAC entity configured with an uplink (UL) is activated, or any SCell of a MAC entity configured with a UL corresponding to the first configuration information is activated, and a first activated downlink bandwidth part (BWP) identifier of the SCell is not set to a dormant BWP; any secondary cell group (SCG) is activated; addition or update of a primary secondary cell (PSCell); a PHR prohibit timer corresponding to the first configuration information expires or has expired, and for any activated serving cell of any MAC entity configured with an uplink and having a UL resource for new transmission, or for any activated serving cell of any MAC entity configured with an uplink, having a UL resource for new transmission and corresponding to the first configuration information, the following situations are true: the cell is allocated with a UL resource for transmission or a physical uplink control channel (PUCCH) transmission, and a change of power reduction corresponding to the first configuration information required by power management of the cell has exceeded a PHR transmit power change factor corresponding to the first configuration information; an activated BWP of any SCell of a MAC entity configured with a UL is switched from a dormant BWP to a non-dormant downlink BWP, or an activated BWP of any SCell of a MAC entity configured with a UL corresponding to the first configuration information is switched from a dormant BWP to a non-dormant downlink BWP; if an FR2 MPE report is configured, and an MPE prohibit timer corresponding to the first configuration information is not running, and a measured P-MPR corresponding to the first configuration information for meeting an FR2 MPE requirement is greater than or equal to an MPE threshold corresponding to the first configuration information; if an FR2 MPE report is configured, and an MPE prohibit timer corresponding to the first configuration information is not running, and for at least one activated FR2 serving cell, a change of a P-MPR corresponding to the first configuration information for meeting an FR2 MPE requirement exceeds a PHR transmit power change factor corresponding to the first configuration information.

Optionally, PH values corresponding to N pieces of configuration information are carried in a single medium access control-control element (MAC CE), N being a positive integer; where the N pieces of configuration information are all target configuration information, or the N pieces of configuration information are N1 pieces of target configuration information and (N-N1) pieces of configuration information for which PHR is not triggered, and N1 is a positive integer less than N.

Optionally, sorting or positions of the PH values of the N pieces of configuration information in the MAC CE is determined based on identifier values of the N pieces of configuration information.

Optionally, the MAC CE further includes first indication information, the first indication information being used to indicate configuration information corresponding to a respective PH value in the MAC CE.

Optionally, a UL resource corresponding to one of the N pieces of configuration information is used to carry the MAC CE, or a UL resource corresponding to each of the N pieces of configuration information is used to carry the MAC CE, or a UL resource corresponding to one of the N1 pieces of target configuration information is used to carry the MAC CE, or a UL resource corresponding to each target configuration information among the N pieces of configuration information is used to carry the MAC CE.

Optionally, the MAC CE further includes at least one of the following: a maximum transmit power corresponding to each PH value carried; a maximum transmit power of a terminal device; maximum transmit powers corresponding to the N pieces of configuration information.

Optionally, PH values corresponding to N pieces of configuration information are carried in N MAC CEs respectively, N being a positive integer; where the N pieces of configuration information are all target configuration information, or the N pieces of configuration information are N1 pieces of target configuration information and (N-N1) pieces of configuration information for which PHR is not triggered, and N1 is a positive integer less than N.

Optionally, each MAC CE further includes second indication information, the second indication information being used to indicate configuration information corresponding to a PH value carried by the MAC CE.

Optionally, a carrying order or a transmission order of the N MAC CEs in an uplink resource is determined based on identifier values of the N pieces of configuration information.

Optionally, each MAC CE further includes at least one of the following: a maximum transmit power corresponding to a PH value carried by the MAC CE; a maximum transmit power of a terminal device.

Optionally, a UL resource corresponding to one of the N pieces of configuration information is used to carry the N MAC CEs, or a UL resource corresponding to one of the N1 pieces of target configuration information is used to carry the N MAC CEs, or a UL resource corresponding to each configuration information among the N pieces of configuration information is used only to carry a MAC CE corresponding to the configuration information, or UL resources corresponding to the N1 pieces of target configuration information are each used to carry the N MAC CEs, or a UL resource corresponding to each configuration information among the N pieces of configuration information is used to carry MAC CEs corresponding to the N pieces of configuration information.

Optionally, the target configuration information at least includes second configuration information and third configuration information, where a MAC CE containing a PH value corresponding to the second configuration information is carried on a second UL resource, and a MAC CE containing a PH value corresponding to the third configuration information is carried on a third UL resource; or, a MAC CE containing a PH value corresponding to the second configuration information and a MAC CE containing a PH value corresponding to the third configuration information are both carried on the second UL resource, and/or a MAC CE containing a PH value of the second configuration information and a MAC CE containing a PH value of the third configuration information are both carried on the third UL resource; where the second UL resource is a UL resource corresponding to the second configuration information, and the third UL resource is a UL resource corresponding to the third configuration information.

Optionally, if the second UL resource and the third UL resource do not overlap or partially overlap in a time domain, the MAC CE containing the PH value of the second configuration information and the MAC CE containing the PH value of the third configuration information are both carried only on whichever of the second UL resource and the third UL resource becomes available earlier.

Optionally, the PH value corresponding to the second configuration information is an actual PH value calculated based on an actual uplink transmission corresponding to the second configuration information, and the PH value corresponding to the third configuration information is an actual PH value calculated based on an actual uplink transmission corresponding to the third configuration information; or, if the second UL resource and the third UL resource do not overlap or partially overlap in a time domain, for configuration information corresponding to an earlier-available resource between the second UL resource and the third UL resource, a PH value corresponding to the configuration information is an actual PH value calculated based on an actual uplink transmission corresponding to the configuration information; and for configuration information corresponding to a later-available resource between the second UL resource and the third UL resource, a PH value corresponding to the configuration information is a virtual PH value calculated based on a reference uplink transmission corresponding to the configuration information.

Optionally, the target configuration information only includes second configuration information, configuration information for which PHR is not triggered at least includes fourth configuration information, where a MAC CE containing a PH value corresponding to the second configuration information is carried only on a second UL resource, or is carried on an earlier-available UL resource between the second UL resource and a fourth UL resource, or is carried on both the second UL resource and a fourth UL resource; where the second UL resource is a UL resource corresponding to the second configuration information, and the fourth UL resource is a UL resource corresponding to the fourth configuration information.

Optionally, the PH value corresponding to the second configuration information is an actual PH value calculated based on an actual uplink transmission corresponding to the second configuration information; or, if the second UL resource and the fourth UL resource do not overlap or partially overlap in a time domain, the PH value corresponding to the second configuration information is a virtual PH value calculated based on a reference uplink transmission corresponding to the second configuration information, or the PH value corresponding to the second configuration information is an actual PH value calculated based on an actual uplink transmission corresponding to the second configuration information.

Optionally, the method further includes: receiving a PH value corresponding to the fourth configuration information, where a MAC CE containing the PH value corresponding to the fourth configuration information is carried only on the second UL resource or the fourth UL resource, or is carried on an earlier-available UL resource between the second UL resource and the fourth UL resource, or is carried on both the second UL resource and the fourth UL resource.

Optionally, if the second UL resource and the fourth UL resource completely overlap or partially overlap in a time domain, the PH value corresponding to the fourth configuration information is calculated based on an actual uplink transmission corresponding to the fourth configuration information.

Optionally, if the second UL resource and the fourth UL resource do not overlap or partially overlap in a time domain, the PH value corresponding to the fourth configuration information is calculated based on an actual uplink transmission or a reference uplink transmission corresponding to the fourth configuration information.

Optionally, if there are multiple pieces of target configuration information, and a terminal device does not support calculation or reporting of multiple PH values, a MAC CE containing a PH value corresponding to each target configuration information is carried only on a UL resource corresponding to the target configuration information.

Optionally, if there is one piece of target configuration information, and a terminal device does not support calculation or reporting of multiple PH values, a MAC CE containing the PH value corresponding to the target configuration information is carried only on a UL resource corresponding to the target configuration information, or is carried on an earliest-available resource among UL resources corresponding to the multiple pieces of configuration information, or is carried simultaneously on a UL resource corresponding to each configuration information; where the PH value corresponding to the target configuration information is calculated based on an actual uplink transmission or a reference uplink transmission corresponding to the target configuration information.

Optionally, the receiving the PH value of the uplink transmission corresponding to the target configuration information includes: if there are multiple pieces of target configuration information, and a terminal device does not support calculation or reporting of multiple PH values, receiving a MAC CE containing a PH value corresponding to default configuration information.

Optionally, the PH value corresponding to the default configuration information is calculated based on an actual uplink transmission corresponding to the default configuration information.

Optionally, the default configuration information is configuration information with a smallest identifier value, and/or the default configuration information is configuration information in a slot where a UL resource for transmitting the PH value is located.

Optionally, the MAC CE containing the PH value corresponding to the default configuration information is carried on a UL resource corresponding to the default configuration information, or is carried on an earliest-available resource among UL resources corresponding to respective target configuration information, or is carried on a UL resource corresponding to each target configuration information; or, if UL resources corresponding to the multiple pieces of target configuration information completely overlap or partially overlap, the MAC CE containing the PH value corresponding to the default configuration information is carried on each overlapping UL resource.

In a third aspect, embodiments of the present application further provide a communication apparatus, including: a transmitting module, configured to transmit a power headroom (PH) value of an uplink transmission corresponding to target configuration information; where the target configuration information is configuration information, among multiple pieces of configuration information corresponding to uplink transmission(s), for which a power headroom report (PHR) is triggered.

In a fourth aspect, embodiments of the present application further provide another communication apparatus, including: a receiving module, configured to receive a power headroom (PH) value of an uplink transmission corresponding to target configuration information; where the target configuration information is configuration information, among multiple pieces of configuration information corresponding to uplink transmission(s), for which a power headroom report (PHR) is triggered.

In a fifth aspect, embodiments of the present application provide a computer-readable storage medium having a computer program stored thereon. When the computer program is executed by a processor, the power headroom reporting method provided in the first aspect or the second aspect is executed.

In a sixth aspect, embodiments of the present application further provide a terminal, including a memory and a processor, the memory storing a computer program executable by the processor. When the processor executes the computer program, steps of the power headroom reporting method provided in the first aspect are executed.

In a seventh aspect, embodiments of the present application further provide a network device, including a memory and a processor, the memory storing a computer program executable by the processor. When the processor executes the computer program, steps of the power headroom reporting method provided in the second aspect are performed.

In an eighth aspect, embodiments of the present application provide a chip (or a communication apparatus), the chip storing a computer program. When the computer program is executed by the chip, the power headroom reporting method provided in the first aspect or the second aspect is executed.

In a ninth aspect, embodiments of the present application provide a chip module, the chip module storing a computer program. When the computer program is executed by the chip module, the power headroom reporting method provided in the first aspect or the second aspect is executed.

In a tenth aspect, embodiments of the present application provide a computer program product, the computer program product including a computer program. When the computer program is executed on a computer, the computer is caused to execute the power headroom reporting method provided in the first aspect or the second aspect.

In an eleventh aspect, embodiments of the present application provide a communication system, the communication system including an apparatus for executing the method provided in the first aspect and an apparatus for executing the method provided in the second aspect.

Compared with the prior art, the technical solution of the embodiments of the present application has the following beneficial effects.

In the solution of the embodiments of the present application, the terminal determines whether multiple pieces of configuration information corresponding to uplink transmission(s) are triggered for power headroom reporting, and then transmits the power headroom value of the uplink transmission corresponding to the target configuration information (i.e., the configuration information for which the power headroom report is triggered) to the network device. In the multi-panel transmission scenario, the configuration information corresponding to the uplink transmission can indicate the antenna panel from which the uplink transmission originates, thereby enabling the network device to obtain power information of different antenna panels, so as to perform more accurate power control on uplink channels or signals from different antenna panels, ensuring uplink transmission performance of multi-panel transmission.

### BRIEF DESCRIPTION OF DRAWINGS

FIG. 1 is a schematic flowchart of a power headroom reporting method according to an embodiment of the present application.
FIG. 2 is a schematic flowchart of another power headroom reporting method according to an embodiment of the present application.
FIG. 3 is a schematic flowchart of another power headroom reporting method according to an embodiment of the present application.
FIG. 4 is a schematic structural diagram of a communication apparatus according to an embodiment of the present application.
FIG. 5 is a schematic structural diagram of another communication apparatus according to an embodiment of the present application.
FIG. 6 is a schematic hardware structural diagram of a terminal according to an embodiment of the present application.

### DESCRIPTION OF EMBODIMENTS

A communication system applicable to embodiments of the present application includes but is not limited to a third-generation system (3th-generation, abbreviated as 3G), an LTE system, a fourth-generation system (4th-generation, abbreviated as 4G), a fifth-generation (5th-generation, abbreviated as 5G) system, an NR system, a future evolved system or a multi-communication convergence system. Among them, the 5G system can be a non-standalone (non-standalone, abbreviated as NSA) 5G system or a standalone (standalone, abbreviated as SA) 5G system. The solutions of the embodiments of the present application can also be applied to various future new communication systems, such as 6G, 7G, etc.

The present application mainly involves communication between a terminal device (or abbreviated as a terminal) and a network device. The terminal in the embodiments of the present application may refer to various forms of user equipment (User Equipment, abbreviated as UE), access terminals, subscriber units, subscriber stations, mobile sites, mobile stations (Mobile Station, abbreviated as MS), remote stations, remote terminals, mobile devices, user terminals, terminal equipment (Terminal Equipment), wireless communication devices, user agents, or user apparatuses. The terminal may also be a cellular phone, a cordless phone, a session initiation protocol (Session Initiation Protocol, abbreviated as SIP) phone, a wireless local loop (Wireless Local Loop, abbreviated as WLL) station, a personal digital assistant (Personal Digital Assistant, abbreviated as PDA), a handheld device with wireless communication functions, a computing device, or other processing devices connected to a wireless modem, a vehicle-mounted device, a wearable device, a terminal in future 5G network, or a terminal in future evolved public land mobile network (Public Land Mobile Network, abbreviated as PLMN), etc., which is not limited in the embodiments of the present application.

The network device in the embodiments of the present application may also be referred to as an access network device, for example, it may be a base station (Base Station, abbreviated as BS) (also referred to as a base station device). The network device is an apparatus deployed in a radio access network (Radio Access Network, abbreviated as RAN) to provide wireless communication functions. For example, a device providing a base station function in second generation (2nd-generation, abbreviated as 2G) network includes a base transceiver station (base transceiver station, abbreviated as BTS), a device providing a base station function in 3G network includes a node B (NodeB), a device providing a base station function in 4G network includes an evolved NodeB (evolved NodeB, abbreviated as eNB), a device providing a base station function in wireless local area networks (wireless local area networks, abbreviated as WLAN) is an access point (access point, abbreviated as AP), and a device providing a base station function in NR is a next generation node base station (next generation node base station, abbreviated as gNB), and a next generation evolved node B (ng-eNB). The communication between the gNB and the terminal is performed using NR technology, the communication between the ng-eNB and the terminal is performed using evolved universal terrestrial radio access (Evolved Universal Terrestrial Radio Access, abbreviated as E-UTRA) technology. Both the gNB and the ng-eNB can be connected to a 5G core network. The network device in the embodiments of the present application also includes a device providing base station functions in future new communication systems, etc.

As mentioned in the background, 3GPP is currently discussing STxMP technology. If a terminal device is configured to use STxMP technology for uplink transmission, there is no relevant solutions or discussions at present on how the terminal device reports a power headroom report.

In view of this, the embodiments of the present application provide a power headroom reporting method. In the solution of the embodiments of the present application, the terminal determines whether multiple pieces of configuration information corresponding to uplink transmission(s) are triggered for power headroom reporting, and then transmits a power headroom value of a channel or a signal of an uplink transmission corresponding to target configuration information (i.e., the configuration information for which the power headroom report is triggered) to the network device. In a multi-panel transmission scenario, the configuration information corresponding to the uplink transmission can indicate an antenna panel from which an uplink transmission originates, thereby enabling the network device to obtain power information of different antenna panels, so as to perform more accurate power control on uplinks from different antenna panels, ensuring uplink transmission performance of multi-panel transmission.

To make the above objectives, features, and advantages of the present application clearer and more comprehensible, in the following, specific embodiments of the present application are described in detail with reference to the accompanying drawings.

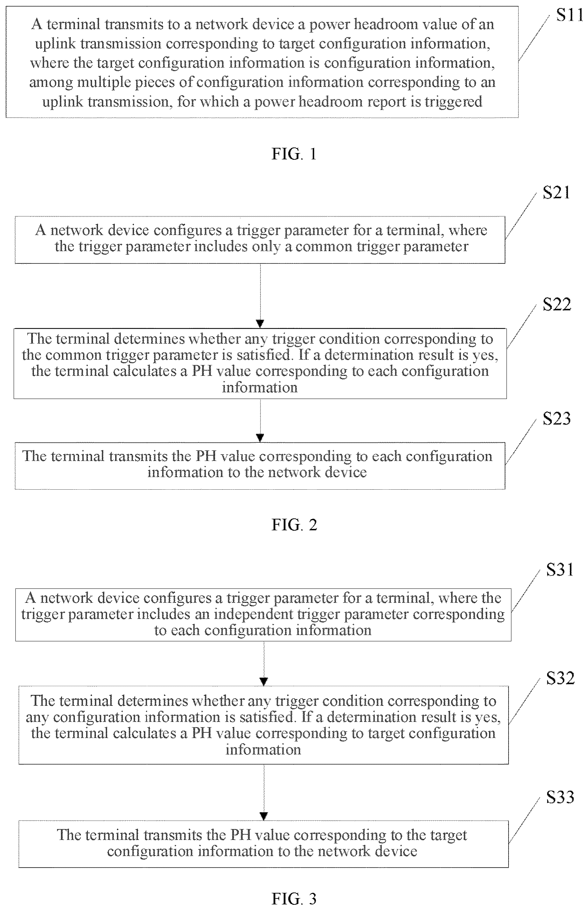

Referring to FIG. 1, FIG. 1 is a schematic flowchart of a power headroom reporting method according to an embodiment of the present application. The power headroom reporting method shown in FIG. 1 may include S11, where "S" in each step serial number in the present application represents "step".

S11, a terminal transmits to a network device a power headroom value of an uplink transmission corresponding to target configuration information, where the target configuration information is configuration information, among multiple pieces of configuration information corresponding to an uplink transmission, for which a power headroom report is triggered.

In STxMP technology, the network device may configure or indicate multiple pieces of configuration information for the terminal, to configure multiple panels of the terminal for uplink transmission. Among them, the configuration information corresponds to antenna panels. For each antenna panel, the configuration information corresponding to this antenna panel is associated with an uplink channel or an uplink reference signal transmitted by this antenna panel.

In the solution of the present application, the configuration information may be used to identify an antenna panel. For example, antenna panel 1 and antenna panel 2 may be identified by configuration information 1 and configuration information 2, respectively. More specifically, the configuration information may explicitly or implicitly identify the antenna panel.

Exemplarily, in the embodiments of the present application, the configuration information may be at least one of the following: a control resource set, a control resource set pool, a control resource set group, a terminal capability set, terminal capability, a transmission configuration indicator (Transmission Configuration Indication, abbreviated as TCI) state, a TCI state pool, a terminal capability value, a terminal capability value set, a reference signal resource, a reference signal resource set, a reference signal resource group, a number of reference signal ports, an antenna panel, an antenna array, an antenna sub-array, an antenna group, an antenna sub-group, an antenna set, an antenna subset, a serving cell, a physical cell.

For example, antenna panel 1 may be identified by TCI state 1 (e.g., TCI state value being 0), and antenna panel 2 may be identified by TCI state 2 (e.g., TCI state value being 1). As another example, antenna panel 1 may be identified by reference signal resource set 1 (e.g., resource set ID being 0), and antenna panel 2 may be identified by reference signal resource set 2 (e.g., resource set ID being 1).

The above multiple pieces of configuration information may be configured or indicated through radio resource control (Radio Resource Control, abbreviated as RRC) signaling, medium access control-control element (Medium Access Control-Control Element, abbreviated as MAC CE) command, or downlink control information (Downlink Control Information, abbreviated as DCI). In specific implementations, the network device may schedule the uplink transmission of the terminal via single downlink control information (single Downlink Control Information, abbreviated as sDCI) or multi-downlink control information (multi-Downlink Control Information, abbreviated as mDCI).

**In an sDCI scheduling scenario,** the above multiple pieces of configuration information are carried in a single DCI, and the terminal may use a first transmission scheme for uplink transmission. In the first transmission scheme, multiple antenna panels perform uplink transmission in a multiplexed or repeated manner.

Specifically, in the sDCI scheduling scenario, the network device may configure multiple antenna panels of the terminal to transmit a physical uplink shared channel (Physical Uplink Shared CHannel, abbreviated as PUSCH), or a physical uplink control channel (Physical Uplink Control Channel, abbreviated as PUCCH), or an uplink reference signal (e.g., a sounding reference signal (Sounding Reference Signal, abbreviated as SRS)), etc., using the first transmission scheme.

The first transmission scheme may be any one of the following: space division multiplexing (Space Division Multiplexing, abbreviated as SDM), single frequency network (Single Frequency Network, abbreviated as SFN), frequency division multiplexing (Frequency Division Multiplexing, abbreviated as FDM), code division multiplexing (Code Division Multiplexing, abbreviated as CDM).

In a non-limiting example, when the network device activates a TCI state, and at least one codepoint in an activation command (e.g., MAC CE command) corresponds to multiple TCI states, it indicates that the network device can schedule the terminal for uplink transmission using the first transmission scheme.

Based on the above understanding, in the sDCI scheduling scenario, uplink transmission corresponding to each configuration information may be the same uplink transmission. For example, the uplink transmission corresponding to each configuration information may be a PUSCH or PUCCH, and multiple antenna panels transmit signals on the PUSCH or PUCCH in a multiplexed or repeated manner.

**In an mDCI scheduling scenario,** the above multiple pieces of configuration information are carried in multiple DCIs respectively, and multiple DCIs schedule uplink transmissions independently. Accordingly, the terminal may use a second transmission scheme for uplink transmission. For example, the multiple pieces of configuration information transmitted by the network device include multiple control resource set pools respectively corresponding to different antenna panels, so that each antenna panel performs uplink transmission according to configuration information corresponding to that antenna panel. In specific implementations, different antenna panels may perform uplink transmissions for different transmission receive points (Transmission Receive Point, abbreviated as TRP), thus the configuration information may also be used to identify the TRP receiving the uplink transmission. For example, control resource set pool 1 (e.g., CORESETPoolIndex value being 0) corresponds to antenna panel 1 and TRP1, control resource set pool 2 (e.g., CORESETPoolIndex value being 1) corresponds to antenna panel 2 and TRP2.

Specifically, in the second transmission scheme, the network device may schedule each antenna panel to perform uplink transmission independently. The uplink transmissions corresponding to the multiple pieces of configuration information are identical or different, and the uplink transmission corresponding to each configuration information may be any one of the following: a PUSCH, a PUCCH, an uplink reference signal (e.g., SRS).

Based on the above understanding, in the mDCI scheduling scenario, the uplink transmissions corresponding to the multiple pieces of configuration information come from different antenna panels, and an uplink transmission corresponding to each configuration information may refer to a channel or a reference signal transmitted by an antenna panel corresponding to that configuration information.

Taking two antenna panels for multi-panel transmission as an example, in the second transmission scheme, antenna panel 1 transmits PUSCH1, antenna panel 2 transmits PUSCH2; or antenna panel 1 transmits PUCCH1, antenna panel 2 transmits PUCCH2; or antenna panel 1 transmits PUSCH, antenna panel 2 transmits PUCCH; or antenna panel 1 transmits SRS1, antenna panel 2 transmits SRS2; or antenna panel 1 transmits SRS, antenna panel 2 transmits PUSCH; or antenna panel 1 transmits SRS, antenna panel 2 transmits PUCCH.

In specific implementations, when the terminal performs uplink transmissions using the second transmission scheme, the uplink transmissions corresponding to the multiple pieces of configuration information may overlap (e.g., STxMP) or may not overlap in the time domain. The overlap may refer to complete overlap or partial overlap.

The method shown in FIG. 1 is applicable to both sDCI and mDCI scheduling scenarios. In S11, if one or more pieces of configuration information corresponding to the uplink transmission are triggered for a power headroom report (Power Headroom Report, abbreviated as PHR), the terminal transmits a power headroom (Power Headroom, abbreviated as PH) value of the uplink transmission corresponding to the target configuration information. The target configuration information refers to configuration information for which PHR is triggered. More specifically, triggering PHR for configuration information may refer to triggering PHR for the antenna panel or triggering the reporting of the PH value of the uplink transmission corresponding to the configuration information.

It should be noted that for ease of description, the PH value of the uplink transmission corresponding to the configuration information is simply referred to as the PH value corresponding to the configuration information below.

**The power headroom reporting method provided by the embodiments of the present application is described in detail below for the sDCI scheduling scenario and the DCI scheduling scenario respectively.**

Referring to FIG. 2, FIG. 2 is a schematic flowchart of another power headroom reporting method according to an embodiment of the present application. Specifically, FIG. 2 shows the power headroom reporting method provided by the embodiment of the present application in the sDCI scenario. The following describes in detail the terminal reporting power headroom in the sDCI scenario in conjunction with FIG. 2. As mentioned above, in the sDCI scenario, the terminal uses the first transmission scheme for uplink transmission.

As shown in FIG. 2, the method shown in FIG. 2 may include S21 to S23.

S21, a network device configures a trigger parameter for a terminal, where the trigger parameter includes only a common trigger parameter.

S22, the terminal determines whether any trigger condition corresponding to the common trigger parameter is satisfied. If a determination result is yes, the terminal calculates a PH value corresponding to each configuration information.

S23, the terminal transmits the PH value corresponding to each configuration information to the network device.

In S21, the terminal receives information for configuring the trigger parameter. Exemplarily, the trigger parameter may be carried in RRC signaling. The trigger parameter includes only the common (common) trigger parameter.

Exemplarily, the common trigger parameter may be any one or more of the following: a PHR periodic timer; a PHR prohibit timer, a PHR transmit power change factor, a type 2 PHR report for other cells, other cell group mode, multi-PHR, an FR2 band maximum permissible exposure (maximum permissible exposure, abbreviated as MPE) report, an MPE prohibit timer, an MPE threshold, the number N of reported power management maximum power reduction (P-MPR) values, an MPE resource pool.

In specific implementations, the PHR periodic timer may be expressed as *phr-PeriodicTimer,* the PHR prohibit timer may be expressed as *phr-ProhibitTimer,* the PHR transmit power change factor may be expressed as *phr-Tx-PowerFactorChange,* the type 2 PHR report for other cells may be expressed as *phr-Type2OtherCell,* the other cell group mode may be expressed as *phr-ModeOtherCG,* the multi-PHR may be expressed as *multiplePHR,* the FR2 band MPE report may be expressed as *mpe-Reporting-FR2,* the MPE prohibit timer may be expressed as *mpe-ProhibitTimer,* the MPE threshold may be expressed as *mpe-Threshold,* the number N of reported power management maximum power reduction (P-MPR) values as *numberOfN,* and the MPE resource pool may be expressed as *mpe-ResourcePool.*

Further, the trigger parameter may also include a mode indication parameter. The mode indication parameter may be used to indicate whether to report multiple PH values by the terminal. That is to say, the mode indication parameter may be used to indicate whether to report PH values corresponding to multiple pieces of configuration information (i.e., multiple antenna panels) by the terminal. Exemplarily, if a value of the mode indication parameter is 1, the terminal is configured to report multiple PH values; if the value of the mode indication parameter is 0, the terminal is configured not to report multiple PH values. In other words, if the value of the mode indication parameter is 0, even if a trigger condition is satisfied, the terminal does not transmit PH values corresponding to multiple pieces of configuration information.

In S22, the terminal determines whether any trigger condition corresponding to the common trigger parameter is satisfied. The trigger condition may refer to a condition that triggers the terminal to report power headroom. In the sDCI scenario, each trigger condition may correspond to one or more common trigger parameters.

In the sDCI scenario, if any trigger condition is satisfied, the terminal calculates and transmits the PH value corresponding to each configuration information. In other words, in the sDCI scenario, if any trigger condition is satisfied, PHR is triggered for each configuration information, i.e., each configuration information is the target configuration information.

Further, in response to any trigger condition being satisfied, for each target configuration information, if the uplink transmission corresponding to the target configuration information is an actual uplink transmission, the terminal may calculate an actual PH value based on the actual uplink transmission, i.e., the PH value corresponding to this configuration information is the actual PH value. If the target configuration information has no corresponding actual uplink transmission, the terminal may calculate a virtual PH value based on a reference uplink transmission, i.e., the PH value corresponding to this target configuration information is the virtual PH value calculated based on the reference uplink transmission. It should be noted that for specific content regarding the calculation of the actual PH value based on an actual uplink transmission and the calculation of the virtual PH value based on a reference uplink transmission, reference may be made to relevant content in existing protocols.

Exemplarily, assume that the network device configures antenna panel 1 and antenna panel 2 of the terminal to transmit an uplink channel (e.g., a PUSCH or a PUCCH) using the first transmission scheme. Antenna panel 1 corresponds to configuration information 1, and antenna panel 2 corresponds to configuration information 2.

When any trigger condition is satisfied, if antenna panel 1 and antenna panel 2 are transmitting uplink channels, i.e., the uplink transmissions corresponding to configuration information 1 and configuration information 2 are both actual uplink transmissions, the terminal may calculate a PH value corresponding to configuration information 1 and a PH value corresponding to configuration information 2 based on the actually transmitted uplink channels.

When any trigger condition is satisfied, if the network device has instructed, via RRC signaling or DCI signaling, the terminal to switch from transmitting an uplink channel via multiple antenna panels to transmitting an uplink channel via a single antenna panel, assume that an antenna panel currently transmitting the uplink channel is antenna panel 1, then the terminal may calculate the PH value corresponding to configuration information 1 based on the actually transmitted uplink channel, and calculate the PH value corresponding to configuration information 2 based on a reference uplink transmission.

When any trigger condition is satisfied, if the terminal camps on a certain cell and the terminal has no uplink transmission in this cell, the terminal may calculate the PH value corresponding to configuration information 1 and the PH value corresponding to configuration information 2 based on the reference uplink transmission.

In the sDCI scenario, assume that the network device configures M antenna panels of the terminal to perform uplink transmission using the first transmission scheme. When the trigger condition is satisfied, M pieces of configuration information are target configuration information.

In step S23, the terminal transmits the calculated PH values. Assume that the number of PH values calculated by the terminal is N. In the method shown in FIG. 2, N=M, i.e., the terminal calculates PH values corresponding to M pieces of configuration information.

In a first example, in the above single MAC CE carrying N PH values, the sorting or positions of the PH values in the MAC CE may be determined based on identifier values of the N pieces of configuration information. For example, the smaller the identifier value of the configuration information, the higher the sorting or the earlier the position of the PH value corresponding to the configuration information in the MAC CE.

In a second example, the above single MAC CE carrying N PH values may further include first indication information. The first indication information may be used to indicate configuration information corresponding to a respective PH value in the MAC CE. That is, the network device may determine the configuration information corresponding to the respective PH value in the MAC CE according to the first indication information in the MAC CE.

Further, in the above single MAC CE carrying N PH values, it may also include at least one of the following: a maximum transmit power corresponding to each PH value carried or a maximum transmit power of the terminal. The maximum transmit power corresponding to the PH value may also refer to the maximum transmit power corresponding to the configuration information. In other words, the single MAC CE may also include the maximum transmit powers corresponding to the N pieces of configuration information. In specific implementations, the maximum transmit powers corresponding to different configuration information may be the same or different.

Further, in the above single MAC CE carrying N PH values, it may also include an indication bit for indicating whether there is a PH value corresponding to each target configuration information. For example, the MAC CE carries PH values corresponding to two pieces of configuration information, respectively PH1 corresponding to SRS resource set ID1 and PH2 corresponding to SRS resource set ID2. The MAC CE also includes an indication bit B1 indicating whether PH1 exists and an indication bit B2 indicating whether PH2 exists.

Further, the terminal transmits the above single MAC CE carrying N PH values to the network device. The MAC CE may be carried in an uplink (Uplink, abbreviated as UL) resource for new transmission.

In another embodiment of the present application, the PH values corresponding to N pieces of configuration information are carried in N MAC CEs respectively. Each MAC CE is used only to carry a single PH value.

Further, each MAC CE may also include at least one of the following: a maximum transmit power corresponding to a PH value carried by that MAC CE; or a maximum transmit power of the terminal device. The maximum transmit power corresponding to the PH value may be the maximum transmit power of the configuration information corresponding to this PH value.

In an example, each MAC CE may also include second indication information. The second indication information may be used to indicate configuration information corresponding to the PH value carried by that MAC CE. Thus, the network device may determine the configuration information corresponding to the PH value carried by the MAC CE according to the second indication information in each MAC CE.

Additionally, each MAC CE may also include an indication bit for indicating whether a PH value exists in the MAC CE.

Further, the terminal transmits the above N MAC CEs carrying N PH values to the network device.

In specific implementations, the carrying order or transmission order of the N MAC CEs in the uplink resource may be determined based on the identifier values of the N pieces of configuration information. For example, the smaller the identifier value of the configuration information, the higher the carrying order or transmission order of the MAC CE containing the PH value corresponding to the configuration information in the uplink resource.

In S23, the terminal may use a UL resource for new transmission to transmit a medium access control-control element (Medium Access Control-Control Element, abbreviated as MAC CE), where the MAC CE carries the PH value corresponding to each target configuration information. In specific implementations, the UL resource for new transmission may be the earliest-available UL resource capable of carrying a MAC CE containing PH values corresponding to all target configuration information.

Exemplarily, if the PH value in step S22 is calculated based on the actual uplink transmission of a PUSCH, and this PUSCH can carry the MAC CE containing PH values corresponding to all target configuration information, then the terminal may transmit the MAC CE on this PUSCH. If the PH value in step S22 is calculated based on the reference uplink transmission of a PUSCH, or is calculated based on the actual uplink transmission or the reference uplink transmission of a PUCCH, then the terminal may transmit the MAC CE on the earliest-available PUSCH capable of carrying the MAC CE containing PH values corresponding to all target configuration information.

In a non-limiting example of the method shown in FIG. 2, if any trigger condition is satisfied, but the terminal's capability does not support calculation or reporting of multiple PH values, then the terminal may calculate a PH value corresponding to default configuration information, and transmit the PH value to the network device.

The above default configuration information may be configuration information with the smallest identifier value among the N pieces of target configuration information, and/or the default configuration information may be configuration information in a slot where the UL resource for transmitting the PH value is located. For example, the default configuration information may be configuration information corresponding to an antenna panel which transmits a PUSCH in a slot where the PUSCH carrying a PHR MAC CE is located, or it may be configuration information with the smallest identifier value in the slot where the PUSCH carrying the PHR MAC CE is located.

In specific implementations, if the uplink transmission corresponding to the default configuration information is an actual uplink transmission, a PH value corresponding to the default configuration information is calculated based on the actual uplink transmission corresponding to the default configuration information. If the default configuration information has no corresponding actual uplink transmission, the terminal may calculate a virtual PH value corresponding to the default configuration information based on a reference uplink transmission.

The above describes the triggering and reporting of power headroom for multiple antenna panels in the sDCI scenario.

Referring to FIG. 3, FIG. 3 is a schematic flowchart of yet another power headroom reporting method according to an embodiment of the present application. Specifically, FIG. 3 shows the power headroom reporting method provided by the embodiment of the present application in the mDCI scenario. The following describes the power headroom reporting method provided by the embodiment of the present application in the mDCI scenario in detail in conjunction with FIG. 3. As mentioned above, in the mDCI scenario, the terminal uses the second transmission scheme for uplink transmission.

As shown in FIG. 3, the method shown in FIG. 3 may include S31 to S33.

S31, a network device configures a trigger parameter for a terminal, where the trigger parameter includes an independent trigger parameter corresponding to each configuration information.

S32, the terminal determines whether any trigger condition corresponding to any configuration information is satisfied. If a determination result is yes, the terminal calculates a PH value corresponding to target configuration information.

S33, the terminal transmits the PH value corresponding to the target configuration information to the network device.

In S31, the network device transmits information for configuring the trigger parameter to the terminal. The trigger parameter may include an independent trigger parameter corresponding to each configuration information. The independent trigger parameter includes any one or more of the following: a PHR periodic timer, a PHR prohibit timer, a PHR transmit power change factor, a type 2 PHR report for other cells, other cell group mode, multi-PHR, an FR2 band maximum permissible exposure (MPE) report, an MPE prohibit timer, an MPE threshold, the number N of reported power management maximum power reduction (P-MPR) values, an MPE resource pool.

That is, in the solution shown in FIG. 3, the network device respectively configures the independent trigger parameter for each antenna panel (or configuration information), and the independent trigger parameters corresponding to different antenna panels (or configuration information) may be the same or different.

Further, the trigger parameter may also include a common trigger parameter and a mode indication parameter. For specific content regarding the common trigger parameter and the mode indication parameter, reference may be made to the relevant description of FIG. 2, which will not be repeated here.

In S32, the terminal determines whether each configuration information is triggered for PHR. In the mDCI scenario, the determination of whether each configuration information is triggered for PHR is independent. Determining whether configuration information is triggered for PHR may refer to determining whether to trigger the reporting of a PH value of an uplink transmission corresponding to the configuration information. Specifically, if any trigger condition corresponding to an independent trigger parameter is satisfied, the configuration information corresponding to the independent trigger parameter is triggered for PHR. In this embodiment, each trigger condition may correspond to one or more independent trigger parameters.

Exemplarily, in any one of the following cases, first configuration information is triggered for PHR, and the first configuration information is any one of the multiple pieces of configuration information.
1. A PHR prohibit timer corresponding to the first configuration information expires or has expired, and a path loss change corresponding to the first configuration information exceeds a PHR transmit power change factor corresponding to the first configuration information. The path loss change is a path loss change of at least one reference signal used as a path loss reference in at least one activated serving cell of a MAC entity, measured from last time this MAC entity uses an uplink resource for new transmission to transmit PHR. This MAC entity is any MAC entity or a MAC entity corresponding to the first configuration information. The activated downlink bandwidth part (Bandwidth Part, abbreviated as BWP) of the MAC entity is a non-dormant BWP.
2. A PHR periodic timer corresponding to the first configuration information expires.
3. A PHR function corresponding to the first configuration information is configured or reconfigured by a higher layer, and the configuration or reconfiguration is not used to disable the PHR function.
4. Any secondary cell (Secondary Cell, abbreviated as SCell) of a MAC entity configured with a UL is activated, or any SCell of a MAC entity configured with a UL corresponding to the first configuration information is activated, and the first activated downlink BWP identifier of the SCell is not set to a dormant BWP.
5. Any secondary cell group (Secondary Cell group, abbreviated as SCG) is activated.
6. Addition or update of a primary secondary cell (Primary Secondary Cell, abbreviated as PSCell).
7. The PHR prohibit timer corresponding to the first configuration information expires or has expired, and for any activated serving cell of any MAC entity configured with an uplink and having a UL resource for new transmission, or for any activated serving cell of any MAC entity configured with an uplink, having a UL resource for new transmission and corresponding to the first configuration information, the following situations are true: this cell is allocated with a UL resource for transmission or PUCCH transmission, and a change of power reduction corresponding to the first configuration information required by power management of this cell has exceeded a PHR transmit power change factor corresponding to the first configuration information. The change of power reduction is a change measured since the last time when the MAC entity had a UL resource for transmission or for PUCCH transmission on this cell and transmitted PHR.
8. An activated BWP of any SCell of a MAC entity configured with a UL is switched from a dormant BWP to a non-dormant downlink BWP, or an activated BWP of any SCell of a MAC entity configured with a UL corresponding to the first configuration information is switched from a dormant BWP to a non-dormant downlink BWP.
9. If an FR2 MPE report is configured, and an MPE prohibit timer corresponding to the first configuration information is not running, and a measured P-MPR corresponding to the first configuration information for meeting an FR2 MPE requirement is greater than or equal to an MPE threshold corresponding to the first configuration information. The MPE threshold is an MPE threshold for at least one activated FR2 serving cell since the last time the MAC entity transmitted PHR.
10. If an FR2 MPE report is configured, and the MPE prohibit timer corresponding to the first configuration information is not running, and for at least one activated FR2 serving cell, a change of a P-MPR corresponding to the first configuration information for meeting an FR2 MPE requirement exceeds a PHR transmit power change factor corresponding to the first configuration information. The change of P-MPR is a change since the last time the MAC entity transmitted PHR due to the measured P-MPR for meeting the MPE requirement being greater than or equal to the PHR transmit power change factor corresponding to the first configuration information.

In specific implementations, during multi-panel uplink transmission, multiple antenna panels may correspond to the same MAC entity, or may correspond to different MAC CE entities.

Further, in a case of the trigger parameter also includes a common trigger parameter, and if only a trigger condition corresponding to the common trigger parameter is satisfied, then PHR is triggered for each configuration information.

In the mDCI scenario, assume that the network device configures M antenna panels of the terminal for uplink transmission, where N1 antenna panels are triggered for PHR, both N1 and M are positive integers, and N1 ≤ M.

If N1 = M, it means that the configuration information corresponding to all antenna panels used for uplink transmission is target configuration information.

If N1 < M, it means that the configuration information corresponding to a portion of the antenna panels used for uplink transmission is target configuration information, while another portion is not triggered for PHR.

Further, in S32, the terminal may report PH values corresponding to N1 pieces of target configuration information. Alternatively, in the mDCI scenario, the terminal may report PH values corresponding to the N1 pieces of target configuration information and a PH value corresponding to at least one piece of configuration information not triggered for PHR.

In step S33, the terminal transmits the calculated PH values. Assume that the number of PH values calculated by the terminal is N, i.e., the terminal calculates PH values corresponding to N pieces of configuration information.

Among them, N pieces of configuration information are all target configuration information, i.e., the terminal reports only PH values corresponding to the target configuration information. In specific implementations, N pieces of target configuration information may be N1 pieces of target configuration information, i.e., N = N1. In other words, the terminal reports PH values corresponding to all target configuration information. Alternatively, the N pieces of target configuration information may be PH values corresponding to a portion of the N1 pieces of target configuration information, i.e., N < N1. In other words, the terminal reports PH values corresponding to a portion of the target configuration information.

Alternatively, the N pieces of configuration information are PH values corresponding to the N1 pieces of target configuration information and PH values corresponding to N2 pieces of configuration information not triggered for PHR, where N2 is a positive integer less than M. That is, N = N1 + N2. In other words, in addition to the PH values corresponding to the target configuration information, the terminal may also report a PH value corresponding to at least one piece of configuration information not triggered for PHR. More specifically, the terminal may additionally report PH values corresponding to all configuration information not triggered for PHR, or the terminal may only additionally report PH values corresponding to a portion of the configuration information not triggered for PHR, where the portion of configuration information may be arbitrarily determined by the terminal device or determined in an ascending order according to identifier values of the configuration information.

In specific implementations, N PH values may be carried in a single MAC CE. For specific content regarding carrying N PH values in a single MAC CE, reference may be made to the relevant description of FIG. 2, which will not be repeated here.

Further, the above MAC CE carrying the N PH values may be carried on a UL resource corresponding to one of the N pieces of configuration information. That is, the UL resource corresponding to one of the N pieces of configuration information is used to carry the MAC CE.

Alternatively, the above MAC CE carrying the N PH values may be carried on a UL resource corresponding to each of the N pieces of configuration information. That is, the UL resources corresponding to the N pieces of configuration information are each used to carry the MAC CE.

Alternatively, the above MAC CE carrying the N PH values may be carried on a UL resource corresponding to one of the N1 pieces of target configuration information. That is, the UL resource corresponding to one of the N1 pieces of target configuration information is used to carry the MAC CE.

Alternatively, the above MAC CE carrying the N PH values may be carried on a UL resource corresponding to each target configuration information among the N pieces of configuration information. That is, the UL resource corresponding to each target configuration information among the N pieces of configuration information is used to carry the MAC CE.

It should be noted that in the mDCI scenario, a UL resource corresponding to each configuration information may refer to a resource used for the uplink transmission corresponding to the configuration information.

Alternatively, the N PH values may also be carried in N MAC CEs. For specific content regarding carrying N PH values in N MAC CEs, reference may be made to the relevant description of FIG. 2, which will not be repeated here.

Further, the above N MAC CEs may be carried on a UL resource corresponding to one of the N pieces of configuration information. That is, the UL resource corresponding to one of the N pieces of configuration information is used to carry the N MAC CEs.

Alternatively, the above N MAC CEs may be carried on a UL resource corresponding to one of the N1 pieces of target configuration information. That is, the UL resource corresponding to one of the N1 pieces of target configuration information is used to carry the N MAC CEs.

Alternatively, the above N MAC CEs may be carried by N different UL resources respectively, and a UL resource carrying a MAC CE corresponds to the same configuration information as a PH value carried by that MAC CE. In other words, the UL resource corresponding to each configuration information is used to carry a MAC CE containing a PH value corresponding to this configuration information.

Alternatively, the above N MAC CEs may be carried on a UL resource corresponding to each target configuration information among the N1 pieces of target configuration information. That is, the UL resources corresponding to the N1 pieces of target configuration information are each used to carry the N MAC CEs.

Alternatively, the above N MAC CEs may be carried on a UL resource corresponding to each configuration information among the N pieces of configuration information. That is, the UL resource corresponding to each configuration information among the N pieces of configuration information is used to carry the N MAC CEs.

If the N MAC CEs are carried by a single UL resource, the carrying order or transmission order of the N MAC CEs in that UL resource may be determined based on identifier values of the N pieces of configuration information.

**In the mDCI scenario, if N1 pieces of configuration information among M pieces of configuration information are triggered for PHR, and 1<N1≤M, the terminal may report only PH values corresponding to target configuration information. As described above, the terminal may report PH values corresponding to all target configuration information. Alternatively, the terminal may report PH values corresponding to a portion of the target configuration information. That is, the terminal reports PH values corresponding to N pieces of target configuration information, where N≤N1. The following describes in detail the specific methods for the terminal to report power headroom when the uplink transmissions corresponding to the N pieces of target configuration information overlap or do not overlap.**

Assume that the N pieces of target configuration information at least include: second configuration information and third configuration information. A UL resource corresponding to the second configuration information is denoted as a second UL resource, and a UL resource corresponding to the third configuration information is denoted as a third UL resource.

**Case 1:** The second UL resource and the third UL resource completely overlap in the time domain. For example, PUSCH2 and PUSCH3 are transmitted simultaneously, where PUSCH2 comes from antenna panel 2 and PUSCH3 comes from antenna panel 3.

In Case 1, the terminal may report a PH value corresponding to the second configuration information and a PH value corresponding to the third configuration information using Method 1 or Method 2 below.

**Method 1:** The terminal calculates a PH value corresponding to the second configuration information based on the uplink transmission corresponding to the second configuration information, and calculates a PH value corresponding to the third configuration information based on the uplink transmission corresponding to the third configuration information. The PH value corresponding to the second configuration information and the PH value corresponding to the third configuration information may be carried in different MAC CEs respectively. Then, the MAC CE containing the PH value corresponding to the second configuration information is transmitted on the second UL resource, and the MAC CE containing the PH value corresponding to the third configuration information is transmitted on the third UL resource.

In other words, in Method 1, the MAC CE containing the PH value corresponding to the second configuration information is carried on the second UL resource, and the MAC CE containing the PH value corresponding to the third configuration information is carried on the third UL resource. That is, the terminal transmits, on a UL resource corresponding to each target configuration information, a MAC CE containing a PH value corresponding to that target configuration information.

For example, the terminal calculates a PH value corresponding to configuration information 2 (denoted as PH2) based on PUSCH2, and calculates a PH value corresponding to configuration information 3 (denoted as PH3) based on PUSCH3. PH2 is carried in MAC CE2, and PH3 is carried in MAC CE3. Then, MAC CE2 is transmitted on PUSCH2, and MAC CE3 is transmitted on PUSCH3.

**Method 2:** The terminal calculates a PH value corresponding to the second configuration information based on the uplink transmission corresponding to the second configuration information, and calculates a PH value corresponding to the third configuration information based on the uplink transmission corresponding to the third configuration information. Then, the MAC CE containing the PH value corresponding to the second configuration information and the MAC CE containing the PH value corresponding to the third configuration information are transmitted on the second UL resource, and the MAC CE containing the PH value corresponding to the second configuration information and the MAC CE containing the PH value corresponding to the third configuration information are transmitted on the third UL resource.

In Method 2, the MAC CE containing the PH value corresponding to the second configuration information and the MAC CE containing the PH value corresponding to the third configuration information are not only both carried on the second UL resource but also both carried on the third UL resource. That is, the terminal transmits the MAC CEs containing the PH values corresponding to the N pieces of target configuration information on a UL resource corresponding to each target configuration information.

For example, the terminal calculates PH2 based on PUSCH2, and calculates PH3 based on PUSCH3. PH2 is carried in MAC CE2, and PH3 is carried in MAC CE3. Then, MAC CE2 and MAC CE3 are transmitted on PUSCH2, and MAC CE2 and MAC CE3 are transmitted on PUSCH3.

**Method 3:** The terminal calculates a PH value corresponding to the second configuration information based on the uplink transmission corresponding to the second configuration information, and calculates a PH value corresponding to the third configuration information based on the uplink transmission corresponding to the third configuration information. Then, the MAC CE containing the PH value corresponding to the second configuration information and the MAC CE containing the PH value corresponding to the third configuration information are transmitted on the second UL resource or the third UL resource, or transmitted on a default UL resource. The default UL resource may be a UL resource corresponding to the configuration information with the smallest identifier value among the N1 pieces of target configuration information.

In other words, in Method 3, the MAC CE containing the PH value corresponding to the second configuration information and the MAC CE containing the PH value corresponding to the third configuration information are carried on either the second UL resource or the third UL resource, or on whichever of the second UL resource and the third UL resource is designated as the default UL resource. That is, in Method 3, the terminal transmits the PH values corresponding to the N pieces of target configuration information on a UL resource corresponding to any one of the N pieces of target configuration information or on the default UL resource.

In Method 2 and Method 3, the PH value corresponding to the second configuration information and the PH value corresponding to the third configuration information may be carried in the same MAC CE or in different MAC CEs.

Since in Case 1, the second UL resource and the third UL resource completely overlap in the time domain, regardless of whether the second UL resource or the third UL resource is used to report power headroom, the uplink transmissions corresponding to the second and third configuration information are both actual uplink transmissions. Therefore, the PH values corresponding to the second and third configuration information can both be actual PH values. Specifically, the PH value corresponding to the second configuration information may be an actual PH value calculated based on an actual uplink transmission corresponding to the second configuration information, and the PH value corresponding to the third configuration information may be an actual PH value calculated based on an actual uplink transmission corresponding to the third configuration information.

**Case 2:** The second UL resource and the third UL resource do not overlap or partially overlap in the time domain. For example, PUSCH2 and PUSCH3 are transmitted successively, where PUSCH2 comes from antenna panel 2 and PUSCH3 comes from antenna panel 3.

In Case 2, the terminal may report power headroom using Method 1, Method 4, or Method 5.

**Method 1:** Reference may be made to the above description for the specific content of Method 1, details will not be repeated here.

**Method 4:** The terminal may use an earlier-available UL resource between the second UL resource and the third UL resource to transmit the MAC CE containing the PH value corresponding to the second configuration information and the MAC CE containing the PH value corresponding to the third configuration information.

In other words, the MAC CE containing the PH value corresponding to the second configuration information and the MAC CE containing the PH value corresponding to the third configuration information are both carried only on whichever of the second UL resource and the third UL resource becomes available earlier. That is, the terminal transmits the MAC CEs containing the PH values corresponding to the N1 pieces of target configuration information on the earliest-available resource among the UL resources corresponding to the N1 pieces of target configuration information.

For a TRP that receives the earlier uplink transmission, the terminal using Method 3 for power headroom reporting allows this TRP, which receives the earlier uplink transmission, to obtain multiple PH values reported by the terminal as soon as possible. Thus, the network device can promptly perform overall power control on the terminal, which is beneficial for ensuring the transmission performance of each uplink transmission.

**Method 5:** The terminal not only uses the second UL resource to transmit the MAC CE containing the PH value corresponding to the second configuration information and the MAC CE containing the PH value corresponding to the third configuration information, but also uses the third UL resource to transmit the MAC CE containing the PH value corresponding to the second configuration information and the MAC CE containing the PH value corresponding to the third configuration information.

In other words, the MAC CE containing the PH value corresponding to the second configuration information and the MAC CE containing the PH value corresponding to the third configuration information are both carried on the second UL resource and both carried on the third UL resource.

Compared to Method 4, the terminal using Method 5 for power headroom reporting allows each TRP, which receives the PH values, to obtain the power information of an earlier uplink transmission and a later uplink transmission, regardless of whether the uplink transmission received by the TRP is earlier or later. Thus, each TRP (especially in non-ideal backhaul scenarios) can perform power control by combining the power information of the uplink transmission corresponding to itself and the power information of the uplink transmissions corresponding to other TRPs, which is beneficial for ensuring the transmission performance of the multi-panel uplink transmission of the terminal device.

In Method 4 and Method 5, the PH value corresponding to the second configuration information and the PH value corresponding to the third configuration information may respectively be actual PH values calculated based on their respective actual uplink transmissions.

Alternatively, in Method 4 and Method 5, for the configuration information corresponding to whichever of the second UL resource and the third UL resource becomes available earlier, a PH value corresponding to that configuration information is an actual PH value calculated based on an actual uplink transmission corresponding to that configuration information. For the configuration information corresponding to whichever of the second UL resource and the third UL resource becomes available later, a PH value corresponding to that configuration information is a virtual PH value calculated based on a reference uplink transmission corresponding to that configuration information.

In other words, among the uplink transmissions corresponding to the second configuration information and the third configuration information, the PH value of the earlier uplink transmission may be an actual PH value calculated based on that uplink transmission, and the PH value of the later uplink transmission may be a virtual PH value calculated based on the reference uplink transmission corresponding to the later uplink transmission. For example, assume PUSCH2 is transmitted first, then a PH value of PUSCH2 is an actual PH value calculated based on PUSCH2, while the PH value of PUSCH2 is a virtual PH value calculated based on a reference uplink transmission corresponding to PUSCH2.

Further, in Method 4 and Method 5, the PH value corresponding to the second configuration information and the PH value corresponding to the third configuration information may be carried in the same MAC CE or in different MAC CEs.

Further, in the mDCI scenario, if there are multiple pieces of target configuration information, but the terminal device does not support calculation or reporting of multiple PH values, then the terminal may use the aforementioned Method 1 or Method 6 to report a PH value corresponding to each target configuration information.

**Method 1:** Reference may be made to the above description for the specific content of Method 1.

**Method 6:** The terminal calculates and transmits a MAC CE containing a PH value corresponding to the default configuration information.

Specifically, the default configuration information may be the configuration information with the smallest identifier value among the multiple pieces of target configuration information, or the default configuration information may be the configuration information in a slot where a UL resource for transmitting a PH value is located. For example, the default configuration information may be configuration information corresponding to an antenna panel which transmits a PUSCH in a slot where the PUSCH carrying a PHR MAC CE is located, or it may be configuration information with the smallest identifier value in the slot where the PUSCH carrying the PHR MAC CE is located.

Further, for the MAC CE containing the PH value corresponding to the default configuration information, the terminal may transmit this MAC CE on the UL resource corresponding to the default configuration information, or on the earliest-available resource among the UL resources corresponding to respective target configuration information, or on the UL resource corresponding to each target configuration information. For example, regardless of whether PUSCH2 and PUSCH3 overlap, the MAC CE containing the PH value corresponding to the default configuration information may be carried on both PUSCH2 and PUSCH3.

If UL resources corresponding to multiple pieces of target configuration information completely overlap or partially overlap, the terminal may also transmit the MAC CE containing the PH value corresponding to the default configuration information on each overlapping UL resource. For example, if PUSCH2 and PUSCH3 completely overlap or partially overlap, the MAC CE containing the PH value corresponding to the default configuration information may be carried on both PUSCH2 and PUSCH3. If PUSCH2 and PUSCH3 do not overlap, the MAC CE containing the PH value corresponding to the default configuration information may be carried on any one of PUSCH2 and PUSCH3, or on the PUSCH that is transmitted earlier between PUSCH2 and PUSCH3.

In other words, the MAC CE containing the PH value corresponding to the default configuration information may be carried on the UL resource corresponding to the default configuration information; or carried on the earliest-available resource among the UL resources corresponding to respective target configuration information; or carried on the UL resource corresponding to each target configuration information. Alternatively, if UL resources corresponding to multiple pieces of target configuration information completely overlap or partially overlap, the MAC CE containing the PH value corresponding to the default configuration information may be carried on each overlapping UL resource.

For specific content regarding the default configuration information, reference may be made to the above relevant description about the default configuration information, which will not be repeated here.

In the mDCI scenario, if among M pieces of configuration information, N1 pieces of configuration information are triggered for PHR, and 1≤N1<M, N PH values that may be reported by the terminal may include only PH values corresponding to the N1 pieces of target configuration information, or may include the PH values corresponding to the N1 pieces of target configuration information and PH values corresponding to N2 pieces of configuration information not triggered for PHR. That is, N≥N1. The following describes in detail specific methods for the terminal to report power headroom for the cases where the uplink transmission corresponding to the target configuration information and the uplink transmission corresponding to the configuration information not triggered for PHR overlap or do not overlap.

Assume that the target configuration information at least includes second configuration information, and configuration information not triggered for PHR at least includes fourth configuration information. A UL resource corresponding to the second configuration information is denoted as a second UL resource, and a UL resource corresponding to the fourth configuration information is denoted as a fourth UL resource.

**Case 3:** The second UL resource and the fourth UL resource completely overlap in the time domain. For example, PUSCH2 and PUSCH4 are transmitted simultaneously, where PUSCH2 comes from antenna panel 2 and PUSCH4 comes from antenna panel 4.

In Case 3, the terminal may report power headroom using Method a, Method b, Method d, Method d, or Method e.

**Method a:** The terminal calculates only a PH value corresponding to the second configuration information and transmits the MAC CE containing the PH value corresponding to the second configuration information on the second UL resource.

In other words, in Method a, the terminal transmits only the PH value corresponding to the second configuration information, and the MAC CE containing the PH value corresponding to the second configuration information is carried only on the second UL resource. Since the fourth configuration information is not triggered for PHR, calculation and transmission with respect to the fourth configuration information is not required. That is, in Method a, the terminal only reports the PH value corresponding to the target configuration information to the TRP that receives the uplink transmission corresponding to the target configuration information and does not report a PH value corresponding to configuration information not triggered for PHR.

**Method b:** The terminal calculates only the PH value corresponding to the second configuration information, and then transmits the MAC CE containing the PH value corresponding to the second configuration information on both the second UL resource and the fourth UL resource.

In other words, in Method b, the terminal transmits only the PH value corresponding to the second configuration information, and the MAC CE containing the PH value corresponding to the second configuration information is carried on both the second UL resource and the fourth UL resource. That is, in Method b, the terminal not only reports the PH value corresponding to the target configuration information to the TRP that receives the uplink transmission corresponding to the target configuration information, but also reports the PH value corresponding to the target configuration information to the TRP that receives the uplink transmission corresponding to configuration information not triggered for PHR.

Compared to Method a, for the TRP that receives the uplink transmission corresponding to configuration information not triggered for PHR, the terminal using Method b for power headroom reporting allows this TRP to obtain power information of the simultaneously transmitted uplink transmission corresponding to configuration information that has been triggered for PHR, as well as power information of the uplink transmission corresponding to its own configuration information. This enables the TRP to perform power control on the uplink transmission corresponding to configuration information not triggered for PHR by combining the power information of the uplink transmission corresponding to configuration information that has been triggered for PHR, which is beneficial for ensuring the transmission performance of the uplink transmission corresponding to configuration information not triggered for PHR.

In both Method a and Method b, the PH value corresponding to the second configuration information is an actual PH value calculated based on an actual uplink transmission corresponding to the second configuration information.

**Method c:** The terminal calculates only the PH value corresponding to the second configuration information based on the uplink transmission corresponding to the second configuration information. Then, the terminal transmits the MAC CE containing the PH value corresponding to the second configuration information on the second UL resource or the fourth UL resource; or transmits the MAC CE containing the PH value corresponding to the second configuration information on a default UL resource. The default UL resource may be a UL resource corresponding to the configuration information with the smallest identifier value among the N1 pieces of target configuration information or among the N pieces of configuration information.

**Method d:** The terminal calculates the PH value corresponding to the second configuration information and the PH value corresponding to the fourth configuration information. Then, the terminal transmits both the PH value corresponding to the second configuration information and the PH value corresponding to the fourth configuration information on the second UL resource.

In other words, in Method d, the terminal transmits both the PH value corresponding to the second configuration information and the PH value corresponding to the fourth configuration information. Both the PH value corresponding to the second configuration information and the PH value corresponding to the fourth configuration information are carried only on the second UL resource. That is, in Method d, the terminal not only reports the PH value corresponding to the target configuration information to the TRP that receives the uplink transmission corresponding to the target configuration information, but also reports the PH value corresponding to configuration information not triggered for PHR to the TRP that receives the uplink transmission corresponding to the target configuration information.

Compared to Method a, the terminal using Method d for power headroom reporting allows the TRP, which receives the uplink transmission corresponding to the target configuration information, to also obtain power information of the uplink transmission corresponding to configuration information not triggered for PHR. This enables the TRP to perform power control on the uplink transmission corresponding to configuration information that has been triggered for PHR by combining the power information of the uplink transmission corresponding to configuration information not triggered for PHR, which is beneficial for ensuring the transmission performance of the uplink transmission corresponding to configuration information not triggered for PHR.

Further, in Method d, the PH value corresponding to the second configuration information and the PH value corresponding to the fourth configuration information may be carried in the same MAC CE or in different MAC CEs.

**Method e:** The terminal calculates the PH value corresponding to the second configuration information and the PH value corresponding to the fourth configuration information. Then, the terminal transmits the MAC CE containing the PH value corresponding to the second configuration information on the second UL resource, and transmits the MAC CE containing the PH value corresponding to the fourth configuration information on the fourth UL resource.

In other words, in Method e, the terminal transmits both the PH value corresponding to the second configuration information and the PH value corresponding to the fourth configuration information. The MAC CE containing the PH value corresponding to the second configuration information is carried on the second UL resource, and the MAC CE containing the PH value corresponding to the fourth configuration information is carried on the fourth UL resource. That is, in Method e, the terminal not only reports the PH value corresponding to the target configuration information to the TRP that receives the uplink transmission corresponding to the target configuration information, but also reports the PH value corresponding to configuration information not triggered for PHR to the TRP that receives the uplink transmission corresponding to configuration information not triggered for PHR.

In Method e, the PH value corresponding to the second configuration information and the PH value corresponding to the fourth configuration information may be carried in different MAC CEs.

Compared to Method a, for the TRP that receives the uplink transmission corresponding to configuration information not triggered for PHR, the terminal using Method e for power headroom reporting allows this TRP to obtain power information of the corresponding uplink transmission even when its configuration information is not triggered for PHR. This enables this TRP to perform power control on this uplink transmission in advance, which is beneficial for ensuring the transmission performance of the uplink transmission.

**Method f:** The terminal calculates the PH value corresponding to the second configuration information and the PH value corresponding to the fourth configuration information. Then, the terminal transmits the MAC CE containing the PH value corresponding to the second configuration information and the MAC CE containing the PH value corresponding to the fourth configuration information on the second UL resource, and also transmits the MAC CE containing the PH value corresponding to the second configuration information and the MAC CE containing the PH value corresponding to the fourth configuration information on the fourth UL resource.

In other words, in Method f, the terminal transmits both the PH value corresponding to the second configuration information and the PH value corresponding to the fourth configuration information. The MAC CE containing the PH value corresponding to the second configuration information and the MAC CE containing the PH value corresponding to the fourth configuration information are both carried on the second UL resource, and both carried on the fourth UL resource. In other words, in Method f, the terminal reports both the PH value corresponding to the target configuration information and the PH value corresponding to configuration information not triggered for PHR to a TRP corresponding to each configuration information.

**Method g:** The terminal calculates the PH value corresponding to the second configuration information and the PH value corresponding to the fourth configuration information. Then, the terminal transmits the MAC CE containing the PH value corresponding to the second configuration information and the MAC CE containing the PH value corresponding to the fourth configuration information on the second UL resource or the fourth UL resource; or transmits the MAC CE containing the PH value corresponding to the second configuration information and the MAC CE containing the PH value corresponding to the fourth configuration information on a default UL resource. The default UL resource may be a UL resource corresponding to the configuration information with the smallest identifier value among the N1 pieces of target configuration information or among the N pieces of configuration information.

In Method d, Method e, Method f and Method g, the terminal may calculate the PH value corresponding to the second configuration information based on the actual uplink transmission corresponding to the second configuration information, and calculate the PH value corresponding to the fourth configuration information based on the actual uplink transmission corresponding to the fourth configuration information.

**Case 4:** The second UL resource and the fourth UL resource do not overlap or partially overlap in the time domain. For example, PUSCH2 and PUSCH4 are transmitted successively, where PUSCH2 comes from antenna panel 2 and PUSCH4 comes from antenna panel 4.

In Case 4, the terminal may report power headroom using Method h, Method i, Method j, Method k, or Method 1.

**Method h:** The terminal calculates the PH value corresponding to the second configuration information based on the actual uplink transmission corresponding to the second configuration information. Then, the terminal transmits the MAC CE containing the PH value corresponding to the second configuration information on the second UL resource, or transmits the MAC CE containing the PH value corresponding to the second configuration information on the second UL resource and the fourth UL resource respectively, or transmits the MAC CE containing the PH value corresponding to the second configuration information on the earlier-available UL resource between the second UL resource and the fourth UL resource.

In other words, in Method g, the terminal transmits only the PH value corresponding to the second configuration information. The MAC CE containing the PH value corresponding to the second configuration information is carried only on the second UL resource, or carried on the earlier-available UL resource between the second UL resource and the fourth UL resource, or carried on both the second UL resource and the fourth UL resource. The PH value corresponding to the second configuration information is an actual PH value calculated based on the actual uplink transmission corresponding to the second configuration information.

For example, antenna panel 2 is triggered for PHR, antenna panel 4 is not triggered for PHR. The terminal calculates PH2 based on PUSCH2. MAC CE2 containing PH2 is carried on PUSCH2, or carried on both PUSCH2 and PUSCH4, or carried on the one which is transmitted earlier between PUSCH2 and PUSCH4.

**Method i:** The terminal calculates the PH value corresponding to the second configuration information based on a reference uplink transmission corresponding to the second configuration information. Then, the terminal transmits the MAC CE containing the PH value corresponding to the second configuration information on the second UL resource, or transmits the MAC CE containing the PH value corresponding to the second configuration information on the second UL resource and the fourth UL resource respectively, or transmits the MAC CE containing the PH value corresponding to the second configuration information on the earlier-available UL resource between the second UL resource and the fourth UL resource.

Unlike Method h, the PH value corresponding to the second configuration information reported in Method i is a virtual PH value calculated based on the reference uplink transmission. Specifically, when the second configuration information is triggered for PHR, there is no uplink transmission corresponding to the second configuration information. The terminal can calculate a virtual PH value based on the reference uplink transmission corresponding to the second configuration information.

In Method h and Method i, the terminal reports only the PH value corresponding to the target configuration information. For example, the PH value corresponding to the target configuration information may be carried on the UL resource corresponding to that target configuration information. Alternatively, the PH value corresponding to the target configuration information is carried on both the UL resource corresponding to that target configuration information and the UL resource corresponding to configuration information not triggered for PHR. Alternatively, the PH value corresponding to the target configuration information is carried on the earliest-available UL resource between the UL resource corresponding to the target configuration information and the UL resource corresponding to configuration information not triggered for PHR.

**Method j:** The terminal calculates the PH value corresponding to the second configuration information and the PH value corresponding to the fourth configuration information. Then, the terminal transmits the MAC CE containing the PH value corresponding to the second configuration information and the MAC CE containing the PH value corresponding to the fourth configuration information on the second UL resource.

In other words, in Method j, the terminal transmits both the PH value corresponding to the second configuration information and the PH value corresponding to the fourth configuration information. The MAC CE containing the PH value corresponding to the second configuration information and the MAC CE containing the PH value corresponding to the fourth configuration information are both carried on the second UL resource. That is, in Method j, the terminal transmits both the PH value corresponding to the target configuration information and the PH value corresponding to configuration information not triggered for PHR on the UL resource corresponding to the target configuration information.

For the TRP that receives the uplink transmission corresponding to the target configuration information, the terminal using Method j for power headroom reporting allows this TRP to obtain power information of the uplink transmission corresponding to configuration information not triggered for PHR. This enables the TRP to perform power control on the uplink transmission corresponding to the target configuration information based on the power information of the uplink transmission corresponding to configuration information not triggered for PHR, which is beneficial for ensuring the transmission performance of the uplink transmission corresponding to configuration information triggered for PHR.

**Method k:** The terminal calculates the PH value corresponding to the second configuration information and the PH value corresponding to the fourth configuration information. Then, the terminal transmits the MAC CE containing the PH value corresponding to the second configuration information and the MAC CE containing the PH value corresponding to the fourth configuration information on the earlier-available UL resource between the second UL resource and the fourth UL resource.

In other words, in Method k, the terminal transmits both the PH value corresponding to the second configuration information and the PH value corresponding to the fourth configuration information. The MAC CE containing the PH value corresponding to the second configuration information and the MAC CE containing the PH value corresponding to the fourth configuration information are both carried on the earlier-available UL resource between the second UL resource and the fourth UL resource. That is, in Method k, the terminal transmits both the PH value corresponding to the target configuration information and the PH value corresponding to configuration information not triggered for PHR on the earlier-available UL resource between the UL resource corresponding to the target configuration information and the UL resource corresponding to configuration information not triggered for PHR.

The terminal using Method k for power headroom reporting allows the TRP, which receives the earlier uplink transmission, to obtain the multiple PH values reported by the terminal as soon as possible. Thus, the network device can promptly perform overall power control on the terminal, which is beneficial for ensuring the transmission performance of each uplink transmission.

**Method l:** The terminal calculates the PH value corresponding to the second configuration information and the PH value corresponding to the fourth configuration information. Then, the terminal not only transmits the MAC CE containing the PH value corresponding to the second configuration information and the MAC CE containing the PH value corresponding to the fourth configuration information on the second UL resource, but also transmits the MAC CE containing the PH value corresponding to the second configuration information and the MAC CE containing the PH value corresponding to the fourth configuration information on the fourth UL resource. In other words, in Method 1, the terminal transmits both the PH value corresponding to the second configuration information and the PH value corresponding to the fourth configuration information. The MAC CE(s) containing the PH value corresponding to the second configuration information and the PH value corresponding to the fourth configuration information is carried on both the second UL resource and the fourth UL resource. That is, in Method 1, the terminal not only reports the PH value corresponding to the target configuration information and the PH value corresponding to configuration information not triggered for PHR to the TRP that receives the uplink transmission corresponding to the target configuration information, but also reports the PH value corresponding to configuration information not triggered for PHR to the TRP that receives the uplink transmission corresponding to the configuration information not triggered for PHR.

In Method j, Method k and Method 1, the PH value corresponding to the second configuration information may be calculated based on the actual uplink transmission or reference uplink transmission corresponding to the second configuration information, and the PH value corresponding to the fourth configuration information may be calculated based on the actual uplink transmission or reference uplink transmission corresponding to the fourth configuration information.

Additionally, in Method j, Method k and Method 1, the PH value corresponding to the second configuration information and the PH value corresponding to the fourth configuration information may be carried in the same MAC CE or in different MAC CEs.

Further, in the mDCI scenario, assume that among M pieces of configuration information, N1 pieces of configuration information are triggered for PHR. If the terminal device does not support calculation or reporting of multiple PH values, and N1 = 1, then in S32, the terminal may calculate the PH value corresponding to this target configuration information based on the actual uplink transmission or reference uplink transmission corresponding to this target configuration information.

In other words, if there is one piece of target configuration information, and the terminal device does not support calculation or reporting of multiple PH values, the MAC CE containing the PH value corresponding to this target configuration information may be carried only on a UL resource corresponding to this target configuration information, or may be carried on an earliest-available resource among the UL resources corresponding to multiple pieces of configuration information, or may be carried simultaneously on the UL resource corresponding to each configuration information.

If N1>1, then in S32, the terminal may calculate a PH value corresponding to one of the N1 pieces of target configuration information. For example, the terminal may calculate a PH value corresponding to target configuration information with the smallest identifier value among the N1 pieces of target configuration information. Alternatively, the terminal may calculate a PH value corresponding to one of the (N1+N2) pieces of configuration information. For example, the terminal may calculate a PH value corresponding to target configuration information with the smallest identifier value among the (N1+N2) pieces of configuration information.

Further, in S33, for a MAC CE containing the calculated PH value, the terminal may transmit the MAC CE using a UL resource corresponding to configuration information corresponding to this PH value. Alternatively, the terminal may transmit the MAC CE using the earliest-available resource among UL resources corresponding to the (N1 + N2) pieces of configuration information. Alternatively, the terminal may transmit the MAC CE using the earliest-available resource among the UL resources corresponding to the N1 pieces of target configuration information. Alternatively, the terminal may transmit the MAC CE using the UL resource corresponding to each target configuration information. Alternatively, the terminal may transmit the MAC CE using the UL resource corresponding to each configuration information.

It is understandable that in specific implementations, the above methods may be implemented in the form of software programs. The software programs run on a processor integrated inside a chip or chip module. Alternatively, the methods may be implemented in hardware or a combination of hardware and software, for example, using a dedicated chip or chip module, or using a dedicated chip or chip module combined with a software program.

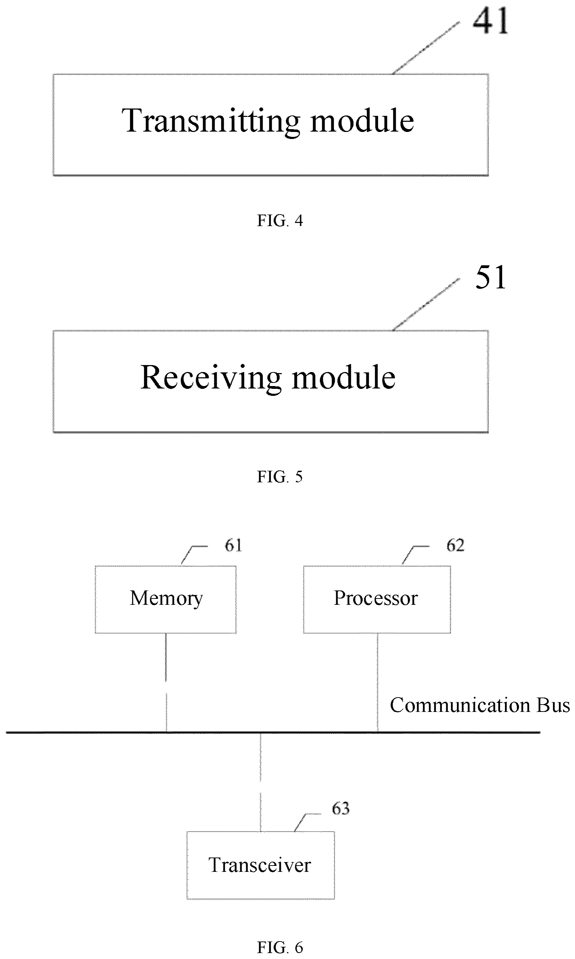

Referring to FIG. 4, FIG. 4 is a schematic structural diagram of a communication apparatus according to an embodiment of the present application. The communication apparatus shown in FIG. 4 may be deployed on a terminal. For example, it may be deployed on the terminal mentioned above. The apparatus shown in FIG. 4 may include:
a transmitting module 41, configured to transmit a power headroom (PH) value of an uplink transmission corresponding to target configuration information;
where the target configuration information is configuration information, among multiple pieces of configuration information corresponding to uplink transmission(s), for which a power headroom report (PHR) is triggered.

Optionally, the transmitting module 41 may be a communication interface, a transceiver, etc.

In specific implementations, the communication apparatus shown in FIG. 4 may correspond to a chip with communication functions in a communication device; or correspond to a communication device including a chip or chip module with communication functions; or correspond to a communication device.

Referring to FIG. 5, FIG. 5 is a schematic structural diagram of another communication apparatus according to an embodiment of the present application. The communication apparatus shown in FIG. 5 may be deployed on a network device. The apparatus shown in FIG. 5 may include:
a receiving module 51, configured to receive a power headroom (PH) value of an uplink transmission corresponding to target configuration information;
where the target configuration information is configuration information, among multiple pieces of configuration information corresponding to uplink transmission(s), for which a power headroom report (PHR) is triggered.

Optionally, the receiving module 51 may be a communication interface, a transceiver, etc.

In specific implementations, the communication apparatus shown in FIG. 5 may correspond to a chip with communication functions in a communication device; or correspond to a communication device including a chip or chip module with communication functions; or correspond to a communication device.

For more information about the working principles, working methods, and beneficial effects of the communication apparatus in the embodiments of the present application, reference may be made to the relevant description of the above communication method, which will not be repeated here.

Embodiments of the present application also provide a computer-readable storage medium having a computer program stored thereon. When the computer program is executed by a computer, the communication method described above is executed. The storage medium may include a read-only memory (read-only memory, abbreviated as ROM), a random access memory (random access memory, abbreviated as RAM), a magnetic disk, an optical disk, etc. The storage medium may also include a non-volatile memory or a non-transitory memory, etc.

Embodiments of the present application also provide a terminal including a memory and a processor, the memory storing a computer program executable by the processor. When the processor executes the computer program, steps of the communication method described above are performed. The terminal includes but is not limited to terminal devices such as mobile phones, computers, tablets, etc. The terminal may be a mobile phone, a computer, a tablet, a vehicle-mounted terminal, a wearable device, etc., but is not limited to this.

Referring to FIG. 6, FIG. 6 is a hardware structural diagram of a terminal according to an embodiment of the present application. The terminal shown in FIG. 6 includes a memory 61, a processor 62, and a transceiver 63. The processor 62 is coupled to the memory 61 and the transceiver 63. The memory 61 may be located inside or outside the terminal. The memory 61, processor 62, and transceiver 63 may be connected via a communication bus. The transceiver 63 is used to communicate with other devices or communication networks.

Optionally, the transceiver 63 may be a transmitter. The memory 61 stores a computer program executable by the processor 62. When the processor 62 executes the computer program, the transceiver 63 performs the steps of the power headroom reporting method provided in the above embodiments.

Embodiments of the present application also provide a network device including a memory and a processor, the memory storing a computer program executable by the processor, where when the processor executes the computer program, steps of the power headroom reporting method described above are performed. For the hardware structural diagram of the network device, reference may be made to the relevant description of FIG. 6, which will not be repeated here.

It should be understood that in the embodiments of the present application, the processor may be a central processing unit (central processing unit, abbreviated as CPU). The processor may also be other general-purpose processor, a digital signal processor (digital signal processor, abbreviated as DSP), an application-specific integrated circuit (application-specific integrated circuit, abbreviated as ASIC), a field-programmable gate array (field-programmable gate array, abbreviated as FPGA) or other programmable logic device, a discrete gate or transistor logic device, a discrete hardware component, etc. A general-purpose processor may be a microprocessor, or the processor may be any conventional processor, etc.

It should also be understood that the memory in the embodiments of the present application may be a volatile memory or a non-volatile memory, or may include both the volatile and non-volatile memories. Among them, the non-volatile memory may be a ROM, a programmable read-only memory (programmable read-only memory, abbreviated as PROM), an erasable programmable read-only memory (erasable PROM, abbreviated as EPROM), an electrically erasable programmable read-only memory (electrically EPROM, abbreviated as EEPROM), or a flash memory. The volatile memory may be a random access memory (random access memory, abbreviated as RAM), which is used as an external cache. By way of example but not limitation, many forms of RAM are available, such as a static random access memory (static RAM, abbreviated as SRAM), a dynamic random access memory (DRAM), a synchronous dynamic random access memory (synchronous DRAM, abbreviated as SDRAM), a double data rate synchronous dynamic random access memory (double data rate SDRAM, abbreviated as DDR SDRAM), an enhanced synchronous dynamic random access memory (enhanced SDRAM, abbreviated as ESDRAM), a synchlink dynamic random access memory (synchlink SDRAM, abbreviated as SLDRAM), and a direct rambus RAM (direct rambus RAM, abbreviated as DR RAM).

The above embodiments may be implemented in whole or in part by software, hardware, firmware, or any other combination. When implemented in software, the above embodiments may be implemented in whole or in part in the form of a computer program product. The computer program product includes one or more computer instructions or computer programs. When the computer instructions or computer programs are loaded and executed on a computer, all or part of the processes or functions described in the embodiments of the present application are generated. The computer may be a general-purpose computer, a special-purpose computer, a computer network, or other programmable apparatuses. The computer program may be stored in a computer-readable storage medium or transmitted from one computer-readable storage medium to another computer-readable storage medium. For example, the computer program may be transmitted from a website, computer, server, or data center to another website, computer, server, or data center by wire or wirelessly.

It should be understood that in the various embodiments of the present application, serial numbers of the above processes do not imply the order of execution. The execution order of each process should be determined by its function and internal logic, and should not constitute any limitation on the implementation process of the embodiments of the present application.

In the several embodiments provided in the present application, it should be understood that the disclosed methods, apparatuses, and systems may be implemented in other ways. For example, the apparatus embodiments described above are only illustrative. For example, the division of units is only a logical function division; in actual implementations, there may be other division manners. For example, multiple units or components may be combined or integrated into another system, or some features may be ignored or not executed. In addition, the shown or discussed coupling or direct coupling or communication connection between each other may be indirect coupling or communication connection between apparatuses or units through some interfaces, and may be electrical, mechanical, or other forms.

The units described as separate components may or may not be physically separated. Components displayed as units may or may not be physical units; that is, they may be located in one place or distributed to multiple network units. Some or all of the units may be selected according to actual needs to achieve the objectives of the solutions of the embodiments.

In addition, the functional units in the various embodiments of the present application may be integrated into one processing unit, or each unit may exist physically alone, or two or more units may be integrated into one unit. The above integrated units may be implemented in the form of hardware or hardware plus software functional units. For example, for each apparatus or product applied to or integrated into a chip, each module/unit included may be implemented in a hardware manner such as a circuit; or at least some modules/units may be implemented in a manner of software program, the software program running on a processor integrated inside the chip, and the remaining (if any) modules/units may be implemented in a hardware manner such as a circuit. For each apparatus or product applied to or integrated into a chip module, each module/unit included may be implemented in a hardware manner such as a circuit; different modules/units may be located in the same component (e.g., a chip, a circuit module, etc.) or different components of the chip module; or at least some modules/units may be implemented in a manner of software program, the software program running on a processor integrated inside the chip module, and the remaining (if any) modules/units may be implemented in a hardware manner such as a circuit. For each apparatus or product applied to or integrated into a terminal, each module/unit included may be implemented in a hardware manner such as a circuit; different modules/units may be located in the same component (e.g., a chip, a circuit module, etc.) or different components of the terminal; or at least some modules/units may be implemented in a manner of software program, the software program running on a processor integrated inside the terminal, and the remaining (if any) modules/units may be implemented in a hardware manner such as a circuit.

The integrated units implemented in the form of software functional units described above may be stored in a computer-readable storage medium. The software functional units are stored in a storage medium and include several instructions for instructing a computer device (which may be a personal computer, a server, a network device, etc.) to perform some steps of the methods described in the various embodiments of the present application. The aforementioned storage medium includes: a U disk, a mobile hard disk, a ROM, a RAM, a magnetic disk, or an optical disk, and other media that can store program codes.

It should be understood that the term "and/or" in this document describes only an association relationship of associated objects, indicating that three relationships may exist. For example, A and/or B may indicate three situations: A exists alone, both A and B exist, and B exists alone. In addition, the character "/" in this document indicates that the associated objects before and after are in an "or" relationship.

"Multiple" in the embodiments of the present application refers to two or more.

"Equal to" in the present application may be used together with "less than" or "greater than" but cannot be used simultaneously with "less than" and "greater than". When "equal to" is used together with "less than," it applies to the technical solution using "less than". When "equal to" is used together with "greater than" it applies to the technical solution using "greater than".

Descriptions such as "first" "second" etc., appearing in the embodiments of the present application are only for illustration and distinction of described objects. They have no order and do not indicate any special limitation on the number of devices in the embodiments of the present application, and cannot constitute any limitation on the embodiments of the present application.

Although the present application is disclosed as above, the present application is not limited to this. Any person skilled in the art can make various changes and modifications without departing from the spirit and scope of the present application. Therefore, the protection scope of the present application should be subject to the scope defined by the claims.

## Claims

1. A power headroom reporting method, comprising:
transmitting a power headroom (PH) value of an uplink transmission corresponding to target configuration information;
wherein the target configuration information is configuration information, among multiple pieces of configuration information corresponding to an uplink transmission, for which a power headroom report (PHR) is triggered.

2. The power headroom reporting method according to claim 1, wherein a transmission scheme of the uplink transmission is a first transmission scheme or a second transmission scheme;
wherein the first transmission scheme is any one of the following: space division multiplexing (SDM), single frequency network (SFN), frequency division multiplexing (FDM), code division multiplexing (CDM);
in the second transmission scheme, uplink transmissions corresponding to the multiple pieces of configuration information are identical or different, and the uplink transmission corresponding to the configuration information is any one of the following: a physical uplink shared channel (PUSCH), a physical uplink control channel (PUCCH), a sounding reference signal (SRS).

3. The power headroom reporting method according to claim 2, wherein when the transmission scheme is the second transmission scheme, the uplink transmissions corresponding to the multiple pieces of configuration information overlap or do not overlap in a time domain.

4. The power headroom reporting method according to claim 1, wherein the configuration information is at least one of the following: a control resource set, a control resource set pool, a control resource set group, a terminal capability set, terminal capability, a transmission configuration indicator (TCI) state, a TCI state pool, a terminal capability value, a terminal capability value set, a reference signal resource, a reference signal resource set, a reference signal resource group, a number of reference signal ports, an antenna panel, an antenna array, an antenna sub-array, an antenna group, an antenna sub-group, an antenna set, an antenna subset, a serving cell, a physical cell.

5. The power headroom reporting method according to claim 1, wherein before the transmitting the PH value of the uplink transmission corresponding to the target configuration information, the method further comprises:
receiving information for configuring a trigger parameter, wherein the trigger parameter comprises a common trigger parameter and/or an independent trigger parameter corresponding to each configuration information.

6. The power headroom reporting method according to claim 5, wherein when the trigger parameter comprises the common trigger parameter and only a trigger condition corresponding to the common trigger parameter is satisfied, a PHR is triggered for each configuration information.

7. The power headroom reporting method according to claim 5, wherein when a transmission scheme of the uplink transmission is a first transmission scheme, the trigger parameter comprises only the common trigger parameter;
wherein the first transmission scheme is any one of the following: space division multiplexing (SDM), single frequency network (SFN), frequency division multiplexing (FDM), code division multiplexing (CDM).

8. The power headroom reporting method according to claim 7, wherein for each configuration information, when an uplink transmission corresponding to the configuration information is an actual uplink transmission, a PH value corresponding to the configuration information is an actual PH value calculated based on the actual uplink transmission; when the configuration information has no corresponding actual uplink transmission, the PH value corresponding to the configuration information is a virtual PH value calculated based on a reference uplink transmission.

9. The power headroom reporting method according to claim 5, wherein the independent trigger parameter comprises any one or more of the following:
a PHR periodic timer, a PHR prohibit timer, a PHR transmit power change factor, a type 2 PHR report for other cells, other cell group mode, multi-PHR, an FR2 band maximum permissible exposure (MPE) report, an MPE prohibit timer, an MPE threshold, a number N of reported power management maximum power reduction (P-MPR) values, an MPE resource pool.

10. The power headroom reporting method according to claim 5, wherein the trigger parameter further comprises a mode indication parameter, and the mode indication parameter is used to indicate whether to report multiple PH values by a terminal device.

11. The power headroom reporting method according to claim 1, wherein first configuration information is triggered for PHR in any one of the following situations, the first configuration information being any one of the multiple pieces of configuration information:
a PHR prohibit timer corresponding to the first configuration information expires or has expired, and a path loss change corresponding to the first configuration information exceeds a PHR transmit power change factor corresponding to the first configuration information;
a PHR periodic timer corresponding to the first configuration information expires;
a PHR function corresponding to the first configuration information is configured or reconfigured by a high layer, and the configuration or reconfiguration is not used to disable the PHR function;
any secondary cell (SCell) of a MAC entity configured with an uplink (UL) is activated, or any SCell of a MAC entity configured with a UL corresponding to the first configuration information is activated, and a first activated downlink bandwidth part (BWP) identifier of the SCell is not set to a dormant BWP;
any secondary cell group (SCG) is activated;
addition or update of a primary secondary cell (PSCell);
a PHR prohibit timer corresponding to the first configuration information expires or has expired, and for any activated serving cell of any MAC entity configured with an uplink and having a UL resource for new transmission, or for any activated serving cell of any MAC entity configured with an uplink, having a UL resource for new transmission and corresponding to the first configuration information, the following situations are true: the cell is allocated with a UL resource for transmission or a physical uplink control channel (PUCCH) transmission, and a change of power reduction corresponding to the first configuration information required by power management of the cell has exceeded a PHR transmit power change factor corresponding to the first configuration information;
an activated BWP of any SCell of a MAC entity configured with a UL is switched from a dormant BWP to a non-dormant downlink BWP, or an activated BWP of any SCell of a MAC entity configured with a UL corresponding to the first configuration information is switched from a dormant BWP to a non-dormant downlink BWP;
if an FR2 MPE report is configured, an MPE prohibit timer corresponding to the first configuration information is not running, and a measured P-MPR corresponding to the first configuration information for meeting an FR2 MPE requirement is greater than or equal to an MPE threshold corresponding to the first configuration information;
if an FR2 MPE report is configured, and an MPE prohibit timer corresponding to the first configuration information is not running, and for at least one activated FR2 serving cell, a change of a P-MPR corresponding to the first configuration information for meeting an FR2 MPE requirement exceeds a PHR transmit power change factor corresponding to the first configuration information.

12. The power headroom reporting method according to claim 1, wherein PH values corresponding to N pieces of configuration information are carried in a single medium access control-control element (MAC CE), N being a positive integer; wherein the N pieces of configuration information are all target configuration information, or the N pieces of configuration information are N1 pieces of target configuration information and (N-N1) pieces of configuration information for which PHR is not triggered, and N1 is a positive integer less than N.

13. The power headroom reporting method according to claim 12, wherein sorting or positions of the PH values of the N pieces of configuration information in the MAC CE is determined based on identifier values of the N pieces of configuration information.

14. The power headroom reporting method according to claim 12, wherein the MAC CE further comprises first indication information, the first indication information being used to indicate configuration information corresponding to a respective PH value in the MAC CE.

15. The power headroom reporting method according to claim 12, wherein a UL resource corresponding to one of the N pieces of configuration information is used to carry the MAC CE, or, a UL resource corresponding to each of the N pieces of configuration information is used to carry the MAC CE, or a UL resource corresponding to one of the N1 pieces of target configuration information is used to carry the MAC CE, or a UL resource corresponding to each target configuration information among the N pieces of configuration information is used to carry the MAC CE.

16. The power headroom reporting method according to claim 12, wherein the MAC CE further comprises at least one of the following:
a maximum transmit power corresponding to each PH value carried;
a maximum transmit power of a terminal device;
maximum transmit powers corresponding to the N pieces of configuration information.

17. The power headroom reporting method according to claim 1, wherein PH values corresponding to N pieces of configuration information are carried in N MAC CEs respectively, N being a positive integer; wherein the N pieces of configuration information are all target configuration information, or the N pieces of configuration information are N1 pieces of target configuration information and (N-N1) pieces of configuration information for which PHR is not triggered, and N1 is a positive integer less than N.

18. The power headroom reporting method according to claim 17, wherein each MAC CE further comprises second indication information, the second indication information being used to indicate configuration information corresponding to a PH value carried by the MAC CE.

19. The power headroom reporting method according to claim 17, wherein a carrying order or a transmission order of the N MAC CEs in an uplink resource is determined based on identifier values of the N pieces of configuration information.

20. The power headroom reporting method according to claim 17, wherein each MAC CE further comprises at least one of the following:
a maximum transmit power corresponding to a PH value carried by the MAC CE;
a maximum transmit power of a terminal device.

21. The power headroom reporting method according to claim 17, wherein a UL resource corresponding to one of the N pieces of configuration information is used to carry the N MAC CEs, or a UL resource corresponding to one of the N1 pieces of target configuration information is used to carry the N MAC CEs, or a UL resource corresponding to each configuration information among the N pieces of configuration information is used only to carry a MAC CE corresponding to the configuration information, or UL resources corresponding to the N1 pieces of target configuration information are each used to carry the N MAC CEs, or a UL resource corresponding to each configuration information among the N pieces of configuration information is used to carry MAC CEs corresponding to the N pieces of configuration information.

22. The power headroom reporting method according to claim 1, wherein the target configuration information at least comprises second configuration information and third configuration information, wherein a MAC CE containing a PH value corresponding to the second configuration information is carried on a second UL resource, and a MAC CE containing a PH value corresponding to the third configuration information is carried on a third UL resource; or,
a MAC CE containing a PH value corresponding to the second configuration information and a MAC CE containing a PH value corresponding to the third configuration information are both carried on the second UL resource, and/or a MAC CE containing a PH value of the second configuration information and a MAC CE containing a PH value of the third configuration information are both carried on the third UL resource;
wherein the second UL resource is a UL resource corresponding to the second configuration information, and the third UL resource is a UL resource corresponding to the third configuration information.

23. The power headroom reporting method according to claim 22, wherein when the second UL resource and the third UL resource do not overlap or partially overlap in a time domain, the MAC CE containing the PH value of the second configuration information and the MAC CE containing the PH value of the third configuration information are both carried only on an earlier-available UL resource between the second UL resource and the third UL resource.

24. The power headroom reporting method according to claim 22, wherein the PH value corresponding to the second configuration information is an actual PH value calculated based on an actual uplink transmission corresponding to the second configuration information, and the PH value corresponding to the third configuration information is an actual PH value calculated based on an actual uplink transmission corresponding to the third configuration information; or,
when the second UL resource and the third UL resource do not overlap or partially overlap in a time domain, for configuration information corresponding to an earlier-available resource between the second UL resource and the third UL resource, a PH value corresponding to the configuration information is an actual PH value calculated based on an actual uplink transmission corresponding to the configuration information; and for configuration information corresponding to a later-available resource between the second UL resource and the third UL resource, a PH value corresponding to the configuration information is a virtual PH value calculated based on a reference uplink transmission corresponding to the configuration information.

25. The power headroom reporting method according to claim 1, wherein the target configuration information only comprises second configuration information, configuration information for which PHR is not triggered at least comprises fourth configuration information, and the transmitting the PH value of the uplink transmission corresponding to the target configuration information comprises:
transmitting a PH value corresponding to the second configuration information, wherein a MAC CE containing the PH value corresponding to the second configuration information is carried only on a second UL resource, or is carried on an earlier-available UL resource between the second UL resource and a fourth UL resource, or is carried on both the second UL resource and a fourth UL resource;
wherein the second UL resource is a UL resource corresponding to the second configuration information, and the fourth UL resource is a UL resource corresponding to the fourth configuration information.

26. The power headroom reporting method according to claim 25, wherein the PH value corresponding to the second configuration information is an actual PH value calculated based on an actual uplink transmission corresponding to the second configuration information; or,
when the second UL resource and the fourth UL resource do not overlap or partially overlap in a time domain, the PH value corresponding to the second configuration information is a virtual PH value calculated based on a reference uplink transmission corresponding to the second configuration information, or the PH value corresponding to the second configuration information is an actual PH value calculated based on an actual uplink transmission corresponding to the second configuration information.

27. The power headroom reporting method according to claim 25, further comprising:
transmitting a PH value corresponding to the fourth configuration information, wherein a MAC CE containing the PH value corresponding to the fourth configuration information is carried only on the second UL resource or the fourth UL resource, or is carried on an earlier-available UL resource between the second UL resource and the fourth UL resource, or is carried on both the second UL resource and the fourth UL resource.

28. The power headroom reporting method according to claim 27, wherein when the second UL resource and the fourth UL resource completely overlap or partially overlap in a time domain, the PH value corresponding to the fourth configuration information is calculated based on an actual uplink transmission corresponding to the fourth configuration information.

29. The power headroom reporting method according to claim 27, wherein when the second UL resource and the fourth UL resource do not overlap or partially overlap in a time domain, the PH value corresponding to the fourth configuration information is calculated based on an actual uplink transmission or a reference uplink transmission corresponding to the fourth configuration information.

30. The power headroom reporting method according to claim 1, wherein when there are multiple pieces of target configuration information, and a terminal device does not support calculation or reporting of multiple PH values, a MAC CE containing a PH value corresponding to each target configuration information is carried only on a UL resource corresponding to the target configuration information.

31. The power headroom reporting method according to claim 1, wherein when there is one piece of target configuration information, and a terminal device does not support calculation or reporting of multiple PH values, a MAC CE containing the PH value corresponding to the target configuration information is carried only on a UL resource corresponding to the target configuration information, or is carried on an earliest-available resource among UL resources corresponding to the multiple pieces of configuration information, or is carried simultaneously on a UL resource corresponding to each configuration information;
wherein the PH value corresponding to the target configuration information is calculated based on an actual uplink transmission or a reference uplink transmission corresponding to the target configuration information.

32. The power headroom reporting method according to claim 1, wherein the transmitting the PH value of the uplink transmission corresponding to the target configuration information comprises:
when there are multiple pieces of target configuration information and a terminal device does not support calculation or reporting of multiple PH values, transmitting a MAC CE containing a PH value corresponding to default configuration information.

33. The power headroom reporting method according to claim 32, wherein the PH value corresponding to the default configuration information is calculated based on an actual uplink transmission corresponding to the default configuration information.

34. The power headroom reporting method according to claim 32, wherein the default configuration information is configuration information with a smallest identifier value, and/or, the default configuration information is configuration information in a slot where a UL resource for transmitting the PH value is located.

35. The power headroom reporting method according to claim 32, wherein the MAC CE containing the PH value corresponding to the default configuration information is carried on a UL resource corresponding to the default configuration information, or is carried on an earliest-available resource among UL resources corresponding to respective target configuration information, or is carried on a UL resource corresponding to each target configuration information; or,
when UL resources corresponding to the multiple pieces of target configuration information completely overlap or partially overlap, the MAC CE containing the PH value corresponding to the default configuration information is carried on each overlapping UL resource.

36. A power headroom reporting method, comprising:
receiving a power headroom (PH) value of an uplink transmission corresponding to target configuration information;
wherein the target configuration information is configuration information, among multiple pieces of configuration information corresponding to an uplink transmission, for which a power headroom report (PHR) is triggered.

37. The power headroom reporting method according to claim 36, wherein a transmission scheme of the uplink transmission is a first transmission scheme or a second transmission scheme;
wherein the first transmission scheme is any one of the following: space division multiplexing (SDM), single frequency network (SFN), frequency division multiplexing (FDM), code division multiplexing (CDM);
in the second transmission scheme, uplink transmissions corresponding to the multiple pieces of configuration information are identical or different, and the uplink transmission corresponding to the configuration information is any one of the following: a physical uplink shared channel (PUSCH), a physical uplink control channel (PUCCH), a sounding reference signal (SRS).

38. The power headroom reporting method according to claim 37, wherein when the transmission scheme is the second transmission scheme, the uplink transmissions corresponding to the multiple pieces of configuration information overlap or do not overlap in a time domain.

39. The power headroom reporting method according to claim 36, wherein the configuration information is at least one of the following: a control resource set, a control resource set pool, a control resource set group, a terminal capability set, terminal capability, a transmission configuration indicator (TCI) state, a TCI state pool, a terminal capability value, a terminal capability value set, a reference signal resource, a reference signal resource set, a reference signal resource group, a number of reference signal ports, an antenna panel, an antenna array, an antenna sub-array, an antenna group, an antenna sub-group, an antenna set, an antenna subset, a serving cell, a physical cell.

40. The power headroom reporting method according to claim 36, wherein before the receiving the PH value of the uplink transmission corresponding to the target configuration information, the method further comprises:
configuring a trigger parameter, wherein the trigger parameter comprises a common trigger parameter and/or an independent trigger parameter corresponding to each configuration information.

41. The power headroom reporting method according to claim 40, wherein when the trigger parameter comprises the common trigger parameter and only a trigger condition corresponding to the common trigger parameter is satisfied, a PHR is triggered for each configuration information.

42. The power headroom reporting method according to claim 40, wherein when a transmission scheme of the uplink transmission is a first transmission scheme, the trigger parameter comprises only the common trigger parameter;
wherein the first transmission scheme is any one of the following: space division multiplexing (SDM), single frequency network (SFN), frequency division multiplexing (FDM), code division multiplexing (CDM).

43. The power headroom reporting method according to claim 42, wherein for each configuration information, when an uplink transmission corresponding to the configuration information is an actual transmission, a PH value corresponding to the configuration information is an actual PH value calculated based on the actual uplink transmission; when the configuration information has no corresponding actual uplink transmission, the PH value corresponding to the configuration information is a virtual PH value calculated based on a reference uplink transmission.

44. The power headroom reporting method according to claim 40, wherein the independent trigger parameter comprises any one or more of the following:
a PHR periodic timer, a PHR prohibit timer, a PHR transmit power change factor, a type 2 PHR report for other cells, other cell group mode, multi-PHR, an FR2 band maximum permissible exposure (MPE) report, an MPE prohibit timer, an MPE threshold, a number N of reported power management maximum power reduction (P-MPR) values, an MPE resource pool.

45. The power headroom reporting method according to claim 40, wherein the trigger parameter further comprises a mode indication parameter, and the mode indication parameter is used to indicate whether to report multiple PH values by a terminal device.

46. The power headroom reporting method according to claim 36, wherein first configuration information is triggered for PHR in any one of the following situations, the first configuration information being any one of the multiple pieces of configuration information:
a PHR prohibit timer corresponding to the first configuration information expires or has expired, and a path loss change corresponding to the first configuration information exceeds a PHR transmit power change factor corresponding to the first configuration information;
a PHR periodic timer corresponding to the first configuration information expires;
a PHR function corresponding to the first configuration information is configured or reconfigured by a high layer, and the configuration or reconfiguration is not used to disable the PHR function;
any secondary cell (SCell) of a MAC entity configured with an uplink (UL) is activated, or any SCell of a MAC entity configured with a UL corresponding to the first configuration information is activated, and a first activated downlink bandwidth part (BWP) identifier of the SCell is not set to a dormant BWP;
any secondary cell group (SCG) is activated;
addition or update of a primary secondary cell (PSCell);
a PHR prohibit timer corresponding to the first configuration information expires or has expired, and for any activated serving cell of any MAC entity configured with an uplink and having a UL resource for new transmission, or for any activated serving cell of any MAC entity configured with an uplink, having a UL resource for new transmission and corresponding to the first configuration information, the following situations are true: the cell is allocated with a UL resource for transmission or a physical uplink control channel (PUCCH) transmission, and a change of power reduction corresponding to the first configuration information required by power management of the cell has exceeded a PHR transmit power change factor corresponding to the first configuration information;
an activated BWP of any SCell of a MAC entity configured with a UL is switched from a dormant BWP to a non-dormant downlink BWP, or an activated BWP of any SCell of a MAC entity configured with a UL corresponding to the first configuration information is switched from a dormant BWP to a non-dormant downlink BWP;
if an FR2 MPE report is configured, an MPE prohibit timer corresponding to the first configuration information is not running, and a measured P-MPR corresponding to the first configuration information for meeting an FR2 MPE requirement is greater than or equal to an MPE threshold value corresponding to the first configuration information;
if an FR2 MPE report is configured, and an MPE prohibit timer corresponding to the first configuration information is not running, and for at least one activated FR2 serving cell, a change of a P-MPR corresponding to the first configuration information for meeting an FR2 MPE requirement exceeds a PHR transmit power change factor corresponding to the first configuration information.

47. The power headroom reporting method according to claim 36, wherein PH values corresponding to N pieces of configuration information are carried in a single medium access control-control element (MAC CE), N being a positive integer; wherein the N pieces of configuration information are all target configuration information, or the N pieces of configuration information are N1 pieces of target configuration information and (N-N1) pieces of configuration information for which PHR is not triggered, and N1 is a positive integer less than N.

48. The power headroom reporting method according to claim 47, wherein sorting or positions of the PH values of the N pieces of configuration information in the MAC CE is determined based on identifier values of the N pieces of configuration information.

49. The power headroom reporting method according to claim 47, wherein the MAC CE further comprises first indication information, the first indication information being used to indicate configuration information corresponding to a respective PH value in the MAC CE.

50. The power headroom reporting method according to claim 47, wherein a UL resource corresponding to one of the N pieces of configuration information is used to carry the MAC CE, or, a UL resource corresponding to each of the N pieces of configuration information is used to carry the MAC CE, or a UL resource corresponding to one of the N1 pieces of target configuration information is used to carry the MAC CE, or a UL resource corresponding to each target configuration information among the N pieces of configuration information is used to carry the MAC CE.

51. The power headroom reporting method according to claim 47, wherein the MAC CE further comprises at least one of the following:
a maximum transmit power corresponding to each PH value carried;
a maximum transmit power of a terminal device;
maximum transmit powers corresponding to the N pieces of configuration information.

52. The power headroom reporting method according to claim 36, wherein PH values corresponding to N pieces of configuration information are carried in N MAC CEs respectively, N being a positive integer; wherein the N pieces of configuration information are all target configuration information, or, the N pieces of configuration information are N1 pieces of target configuration information and (N-N1) pieces of configuration information for which PHR is not triggered, and N1 is a positive integer less than N.

53. The power headroom reporting method according to claim 52, wherein each MAC CE further comprises second indication information, the second indication information being used to indicate configuration information corresponding to a PH value carried by the MAC CE.

54. The power headroom reporting method according to claim 52, wherein a carrying order or a transmission order of the N MAC CEs in an uplink resource is determined based on identifier values of the N pieces of configuration information.

55. The power headroom reporting method according to claim 52, wherein each MAC CE further comprises at least one of the following:
a maximum transmit power corresponding to a PH value carried by the MAC CE;
a maximum transmit power of a terminal device.

56. The power headroom reporting method according to claim 52, wherein a UL resource corresponding to one of the N pieces of configuration information is used to carry the N MAC CEs, or a UL resource corresponding to one of the N1 pieces of target configuration information is used to carry the N MAC CEs, or a UL resource corresponding to each configuration information among the N pieces of configuration information is used only to carry a MAC CE corresponding to the configuration information, or UL resources corresponding to the N1 pieces of target configuration information are each used to carry the N MAC CEs, or a UL resource corresponding to each configuration information among the N pieces of configuration information is used to carry MAC CEs corresponding to the N pieces of configuration information.

57. The power headroom reporting method according to claim 36, wherein the target configuration information at least comprises second configuration information and third configuration information, wherein a MAC CE containing a PH value corresponding to the second configuration information is carried on a second UL resource, and a MAC CE containing a PH value corresponding to the third configuration information is carried on a third UL resource; or,
a MAC CE containing a PH value corresponding to the second configuration information and a MAC CE containing a PH value corresponding to the third configuration information are both carried on the second UL resource, and/or a MAC CE containing a PH value of the second configuration information and a MAC CE containing a PH value of the third configuration information are both carried on the third UL resource;
wherein the second UL resource is a UL resource corresponding to the second configuration information, and the third UL resource is a UL resource corresponding to the third configuration information.

58. The power headroom reporting method according to claim 57, wherein when the second UL resource and the third UL resource do not overlap or partially overlap in a time domain, the MAC CE containing the PH value of the second configuration information and the MAC CE containing the PH value of the third configuration information are both carried only on an earlier-available UL resource between the second UL resource and the third UL resource.

59. The power headroom reporting method according to claim 57, wherein the PH value corresponding to the second configuration information is an actual PH value calculated based on an actual uplink transmission corresponding to the second configuration information, and the PH value corresponding to the third configuration information is an actual PH value calculated based on an actual uplink transmission corresponding to the third configuration information; or,
when the second UL resource and the third UL resource do not overlap or partially overlap in a time domain, for configuration information corresponding to an earlier-available resource between the second UL resource and the third UL resource, a PH value corresponding to the configuration information is an actual PH value calculated based on an actual uplink transmission corresponding to the configuration information; and for configuration information corresponding to a later-available resource between the second UL resource and the third UL resource, a PH value corresponding to the configuration information is a virtual PH value calculated based on a reference uplink transmission corresponding to the configuration information.

60. The power headroom reporting method according to claim 36, wherein the target configuration information only comprises second configuration information, configuration information for which PHR is not triggered at least comprises fourth configuration information, wherein a MAC CE containing a PH value corresponding to the second configuration information is carried only on a second UL resource, or is carried on an earlier-available UL resource between the second UL resource and a fourth UL resource, or is carried on both the second UL resource and a fourth UL resource;
wherein the second UL resource is a UL resource corresponding to the second configuration information, and the fourth UL resource is a UL resource corresponding to the fourth configuration information.

61. The power headroom reporting method according to claim 60, wherein the PH value corresponding to the second configuration information is an actual PH value calculated based on an actual uplink transmission corresponding to the second configuration information; or,
when the second UL resource and the fourth UL resource do not overlap or partially overlap in a time domain, the PH value corresponding to the second configuration information is a virtual PH value calculated based on a reference uplink transmission corresponding to the second configuration information, or the PH value corresponding to the second configuration information is an actual PH value calculated based on an actual uplink transmission corresponding to the second configuration information.

62. The power headroom reporting method according to claim 60, further comprising:
receiving a PH value corresponding to the fourth configuration information, wherein a MAC CE containing the PH value corresponding to the fourth configuration information is carried only on the second UL resource or the fourth UL resource, or is carried on an earlier-available UL resource between the second UL resource and the fourth UL resource, or is carried on both the second UL resource and the fourth UL resource.

63. The power headroom reporting method according to claim 62, wherein when the second UL resource and the fourth UL resource completely overlap or partially overlap in a time domain, the PH value corresponding to the fourth configuration information is calculated based on an actual uplink transmission corresponding to the fourth configuration information.

64. The power headroom reporting method according to claim 62, wherein when the second UL resource and the fourth UL resource do not overlap or partially overlap in a time domain, the PH value corresponding to the fourth configuration information is calculated based on an actual uplink transmission or a reference uplink transmission corresponding to the fourth configuration information.

65. The power headroom reporting method according to claim 36, wherein when there are multiple pieces of target configuration information, and a terminal device does not support calculation or reporting of multiple PH values, a MAC CE containing a PH value corresponding to each target configuration information is carried only on a UL resource corresponding to the target configuration information.

66. The power headroom reporting method according to claim 36, wherein when there is one piece of target configuration information, and a terminal device does not support calculation or reporting of multiple PH values, a MAC CE containing the PH value corresponding to the target configuration information is carried only on a UL resource corresponding to the target configuration information, or is carried on an earliest-available resource among UL resources corresponding to the multiple pieces of configuration information, or is carried simultaneously on a UL resource corresponding to each configuration information;
wherein the PH value corresponding to the target configuration information is calculated based on an actual uplink transmission or a reference uplink transmission corresponding to the target configuration information.

67. The power headroom reporting method according to claim 36, wherein the receiving the PH value of the uplink transmission corresponding to the target configuration information comprises:
when there are multiple pieces of target configuration information and a terminal device does not support calculation or reporting of multiple PH values, receiving a MAC CE containing a PH value corresponding to default configuration information.

68. The power headroom reporting method according to claim 67, wherein the PH value corresponding to the default configuration information is calculated based on an actual uplink transmission corresponding to the default configuration information.

69. The power headroom reporting method according to claim 67, wherein the default configuration information is configuration information with a smallest identifier value, and/or, the default configuration information is configuration information in a slot where a UL resource for transmitting the PH value is located.

70. The power headroom reporting method according to claim 67, wherein the MAC CE containing the PH value corresponding to the default configuration information is carried on a UL resource corresponding to the default configuration information, or is carried on an earliest-available resource among UL resources corresponding to respective target configuration information, or is carried on a UL resource corresponding to each target configuration information; or,
when UL resources corresponding to the multiple pieces of target configuration information completely overlap or partially overlap, the MAC CE containing the PH value corresponding to the default configuration information is carried on each overlapping UL resource.

71. A communication apparatus, comprising:
a transmitting module, configured to transmit a power headroom (PH) value of an uplink transmission corresponding to target configuration information;
wherein the target configuration information is configuration information, among multiple pieces of configuration information corresponding to an uplink transmission, for which a power headroom report (PHR) is triggered.

72. A communication apparatus, comprising:
a receiving module, configured to receive a power headroom (PH) value of an uplink transmission corresponding to target configuration information;
wherein the target configuration information is configuration information, among multiple pieces of configuration information corresponding to an uplink transmission, for which a power headroom report (PHR) is triggered.

73. A computer-readable storage medium, on which a computer program is stored, wherein when the computer program is run by a processor, the power headroom reporting method according to any one of claims 1 to 35 or the power headroom reporting method according to any one of claims 36 to 70 is executed.

74. A terminal, comprising a memory and a processor, wherein the memory stores a computer program runnable on the processor, when the processor runs the computer program, steps of the power headroom reporting method according to any one of claims 1 to 35 are executed.

75. A network device, comprising a memory and a processor, wherein the memory stores a computer program runnable on the processor, when the processor runs the computer program, steps of the power headroom reporting method according to any one of claims 36 to 70 are executed.
